# EUROPEAN PATENT SPECIFICATION

(11) **EP 4 393 732 B1**
(45) Date of publication and mention of the grant of the patent: **27.08.2025**
(21) Application number: 22878407.0
(22) Date of filing: 28.09.2022
(51) Int. Cl.: B60C 11/24, B60C 23/04, B60C 23/06, B60C 19/00, G01M 17/02

(54) **TIRE STATE ESTIMATION METHOD, AND TIRE STATE ESTIMATION SYSTEM**
VERFAHREN ZUR SCHÄTZUNG DES REIFENZUSTANDS UND SYSTEM ZUR SCHÄTZUNG DES REIFENZUSTANDS
PROCÉDÉ D'ESTIMATION D'ÉTAT DE PNEU ET SYSTÈME D'ESTIMATION D'ÉTAT DE PNEU

(30) Priority: 06.10.2021 JP 2021165111
(43) Date of publication of application: 03.07.2024
(73) Proprietor: Sumitomo Rubber Industries, Ltd., Kobe-shi, Hyogo 651-0072 (JP); The School Corporation Kansai University, Suita-shi, Osaka 564-8680 (JP)
(72) Inventor: FUJIWARA, Takahiro, Kobe-shi, Hyogo 651-0072 (JP); SUGIMOTO, Mutsuki, Kobe-shi, Hyogo 651-0072 (JP); KURODA, Kenichi, Kobe-shi, Hyogo 651-0072 (JP); SUGIOKA, Kyota, Kobe-shi, Hyogo 651-0072 (JP); TANI, Hiroshi, Suita-shi, Osaka 564-8680 (JP)
(74) Representative: Manitz Finsterwald Patent- und Rechtsanwaltspartnerschaft mbB
(86) International application number: PCT/JP2022/036325
(87) International publication number: WO 2023/058537

(56) References cited:
- WO-A1-2021/192474
- JP-A- 2005 205 956
- JP-A- 2007 153 034
- JP-A- 2009 061 917
- JP-A- 2010 159 031
- JP-A- 2013 136 297
- JP-A- 2014 234 038
- JP-A- 2015 217 713
- JP-A- 2020 200 012
- US-A1- 2010 186 492
- US-A1- 2019 070 910
- US-A1- 2020 023 693
- US-A1- 2021 257 931
- US-A1- 2021 257 933

## Description

### TECHNICAL FIELD

The present invention relates to a tire state estimation method and a tire state estimation system.

### BACKGROUND ART

Japanese Patent Laid-open Publication No. 2016-190615 (Patent Document 1) discloses a method of estimating a wear amount of a tire using an output signal of an acceleration sensor disposed on an inner side surface of a tire tread. In this method, a radial acceleration waveform of a tire is extracted from a radial acceleration of the tire continuously detected by the acceleration sensor, and is time-differentiated to obtain a differential acceleration waveform. From the obtained differential acceleration waveform, a peak satisfying a condition is extracted from among peaks appearing at a ground contact end, and is set as a wear estimation differential peak value. The wear amount of the tire is estimated based on a reference differential peak value calculated from the wear estimation differential peak value and a map indicating a relationship between the wear amount and the reference differential peak value stored in advance in a storage means. JP 2020-200012 discloses a tire assembly including a tire, a power generating body disposed inside the tire, and an electronic device that receives supply of power that is output from the power generating body. The power generating body includes a first insulating film, a second insulating film, a first electrode, and a second electrode. The first insulating film has a first surface. The second insulating film has a second surface. The first and second electrodes have conductivity. The power generating body is configured such that a true area of contact between the first surface and the second surface changes according to deformation of the tire. Other tire assemblies including a tire, a power generating body disposed inside the tire, and an electronic device that receives supply of power that is output from the power generating body are presented in US 2021/257931 A1, US 2020/023693 A1 and US 2021/257933 A1.

### PRIOR ART DOCUMENTS

### PATENT DOCUMENTS

Patent Document 1: Japanese Patent Laid-open Publication No. 2016-190615

### SUMMARY OF THE INVENTION

### PROBLEMS TO BE SOLVED BY THE INVENTION

The method of Patent Document 1 focuses on the fact that a deformation speed of the tread portion at the time of grounding of the tire changes as the tread portion of the tire wears. However, in this method, in a case where the vehicle on which the tire is mounted mainly travels at a low speed (for example, about 40 km/h), the radial acceleration of the tire decreases and the signal-to-noise ratio deteriorates, so that the estimation accuracy of the wear amount may decrease. Therefore, an estimation method capable of accurately estimating the wear state of the tire even when the vehicle is traveling at a low speed has been desired.

Meanwhile, the present inventors have found that a shape of a ground contact surface of the tire changes when the tread portion of the tire wears. This is considered to be because wear of the tread portion of the tire causes a change in rigidity of the tire. According to this finding, detecting the shape change of the ground contact surface of the tire is useful for acquiring information on the wear state of the tire. The information regarding the wear state of the tire includes, for example, information on whether or not the tire is worn, and information on whether or not uneven wear occurs, which is a state where specific portions are intensively worn.

Moreover, when the vehicle travels straight, the shape change of the ground contact surface may also be caused by a change in the air pressure of the tire, the mounting state, and the wheel load applied to the tire. Therefore, estimating the ground contact state of the tire including the shape change of the ground contact surface of the tire is useful not only for acquiring information regarding the wear state, but also for acquiring information regarding the mounting state of the tire on the wheel, the air pressure of the tire, and the wheel load applied to the tire. The information regarding the mounting state of the tire includes, for example, information on whether or not the tire is mounted on the wheel in an appropriate attitude. The information regarding the air pressure of the tire includes, for example, information indicating whether or not the tire is decompressed, and information indicating whether or not the tire has a pressure higher than necessary. The information regarding the wheel load includes, for example, information indicating whether or not uneven loading, which is a state where the load is concentrated on a specific portion of the vehicle, occurs. As described above, estimating the ground contact state of the tire may be useful for controlling the vehicle including a relationship with the wear state of the tire.

An object of the present disclosure is to provide a wear state estimation method and estimation system that accurately estimate a wear state of a tire even when a vehicle is traveling at a low speed, and a tire ground contact state estimation method and estimation system.

### MEANS FOR SOLVING THE PROBLEM

A tire state estimation method according to the present invention includes the followings:
(1) disposing at least one power generator inside a tire, the power generator generating a voltage in response to deformation of the tire;
(2) acquiring time-series measurement data obtained by measuring at least one of the voltage or a physical quantity corresponding to the voltage while the tire rotates;
(3) identifying peaks repeatedly appearing in the measurement data;
(4) specifying at least one of values of the peaks or an interval between the peaks; and
(5) estimating at least one of a wear state or a ground contact state of the tire based on at least one of the specified values or the specified interval.

The power generator includes a first member and a second member. The first member includes a first insulating film that forms a first surface. The second member includes a second insulating film forming a second surface that faces the first surface and is in contact with the first surface. The first member and the second member are configured such that a true contact area between the first surface and the second surface changes depending on pressure applied to the first member and the second member. The first insulating film and the second insulating film are configured such that one is positively charged and the other is negatively charged due to a change in the true contact area. Identifying the peaks includes identifying a first peak and a second peak that appears in pairs with the first peak. Specifying at least one of the values of the peaks or the interval between the peaks includes specifying at least one of a first interval that is an interval of the first peak, a second interval that is an interval of the second peak, or a time interval between the first peak and the second peak forming a pair.

According to the estimation method, at least one of the wear state or the ground contact state of the tire is estimated based on at least one of the values or the interval of the peaks repeatedly appearing in at least one piece of measurement data of the voltage of the power generator that generates the voltage according to the deformation of the tire and the physical quantity corresponding to the voltage. Since the peaks appear when the impact from a road surface is most strongly transmitted to the power generator at a specific rotational position of the tire, the peaks can be easily specified even in a case where a traveling speed of the vehicle, that is, a rotational speed of the tire is small. As a result, even in a case where the vehicle is traveling at a low speed, it is possible to avoid a decrease in the estimation accuracy of the wear state.

According to an embodiment of the tire state estimation method
the specifying at least one of the values of the peaks or the interval between the peaks includes specifying a first peak value that is value of the first peak, a second peak value that is value of the second peak, the time interval, and the first interval or the second interval. Furthermore, the estimating at least one of the wear state or the ground contact state of the tire includes calculating at least one of a peak comparison value for comparing the first peak value with the second peak value or a time comparison value for comparing the time interval with the first interval or the second interval, and estimating the wear state of the tire based on at least one of the calculated peak comparison value or the calculated time comparison value.

According to an embodiment of the tire state estimation method, the peak comparison value is a ratio between the first peak value and the second peak value,
the time comparison value is a ratio between the time interval and the first interval or the second interval. The estimating the wear state of the tire includes estimating the wear state of the tire based on the peak comparison value and the time comparison value.

According to an embodiment of the tire state estimation method, disposing at least one power generator inside the tire includes disposing the at least one power generator at a position outside a width of a ground contact surface when the tire is new. Furthermore, the specifying at least one of values of the peaks or an interval between the peaks includes specifying values of the peaks of the power generator disposed at the outside position. Moreover, the estimating at least one of the wear state or the ground contact state of the tire includes estimating at least one of the wear state or the ground contact state of the tire based on a change in the specified values.

Depending on the tire, when a tread portion wears, a length in a width direction (ground contact width) of the ground contact surface becomes longer than that when the tread portion is not worn, and a portion that has not been grounded before comes into contact with the ground. Then, the impact from a road surface is more easily transmitted to the power generator disposed in the portion, so that a remarkable change occurs in the measurement data. As a result, it is possible to detect that a change has occurred in the ground contact shape, and it is possible to estimate that wear has occurred in the tire. Note that the "width direction" of a tire refers to a direction parallel to a rotation axis of the tire mounted on a vehicle.

Furthermore, when wear of the tread portion of the tire, a change in the wheel load of the tire, a change in the mounting state, a change in the air pressure, and the like occur, the length of the ground contact surface in the width direction may become long, and a portion that has not been grounded before comes into contact with the ground. Then, the impact from a road surface is more easily transmitted to the power generator disposed in the portion, so that a remarkable change occurs in the measurement data. As a result, it is possible to estimate a state in which a change has occurred in the ground contact shape of the tire.

According to an embodiment of the tire state estimation method, disposing at least one power generator inside the tire includes disposing the at least one power generator at a position of an edge in a width direction of a ground contact surface when the tire is new. Furthermore, the specifying at least one of values of the peaks or an interval between the peaks includes specifying the values of the peaks of the power generator disposed at the position of the edge. Moreover, the estimating at least one of the wear state or the ground contact state of the tire includes estimating at least one of the wear state or the ground contact state of the tire based on a change in the specified values.

Depending on the tire, when the tread portion is worn, the length of the ground contact surface in the width direction becomes shorter than that when the tread portion is not worn, and a portion that has been grounded before does not come into contact with the ground. Then, since the impact from a road surface is less likely to be transmitted to the power generator disposed in the portion, a remarkable change occurs in the measurement data. As a result, it is possible to detect that a change has occurred in the ground contact shape, and it is possible to estimate that wear has occurred in the tire.

Furthermore, when wear of the tread portion of the tire, a change in the wheel load, a change in the mounting state, a change in the air pressure, and the like occur, the length of the ground contact surface in the width direction may be shortened, and a portion that has been grounded before does not come into contact with the ground. Then, since the impact from a road surface is less likely to be transmitted to the power generator disposed in the portion, a remarkable change occurs in the measurement data. As a result, it is possible to estimate a state in which a change has occurred in the ground contact shape of the tire.

According to an embodiment of the tire state estimation method, specifying at least one of values of the peaks or an interval between the peaks includes specifying the time interval and either the first interval or the second interval. Moreover, the estimating at least one of the wear state or the ground contact state of the tire includes calculating a time comparison value for comparing the time interval with the first interval or the second interval, and estimating the ground contact state of the tire based on the calculated time comparison value.

According to an embodiment of the tire state estimation method, the method further includes acquiring a perimeter of the tire. Then, the estimating the ground contact state of the tire includes estimating a circumferential length of a ground contact surface of the tire based on the calculated time comparison value and the acquired perimeter.

The first peak and the second peak forming a pair correspond to a time point at which a specific portion in the circumferential direction of the tire starts grounding and a time point at which grounding is terminated, respectively. That is, the time interval between the first peak and the second peak forming a pair corresponds to the circumferential length of the ground contact surface of the tire. Furthermore, the first interval and the second interval represent a time during which the tire makes one rotation, and correspond to a perimeter of the tire. Thus, the circumferential length of the ground contact surface of the tire can be estimated based on the time comparison value and the perimeter of the tire. Note that the "circumferential direction" of the tire corresponds to a traveling direction of the tire.

A tire state estimation system according to the present invention includes at least one power generator, a measurement device, and an estimation unit. The at least one power generator is disposed inside a tire and generates a voltage in response to deformation of the tire. The measurement device is disposed inside the tire, measures at least one of the voltage or a physical quantity corresponding to the voltage while the tire rotates, and outputs time-series measurement data. The estimation unit that identifies peaks repeatedly appearing in the measurement data, specifies at least one of values of the peaks or an interval between the peaks, and estimates at least one of a wear state or a ground contact state of the tire based on at least one of the specified values or the specified interval.

The power generator includes a first member and a second member. The first member includes a first insulating film that forms a first surface. The second member includes a second insulating film forming a second surface that faces the first surface and is in contact with the first surface. The first member and the second member are configured such that a true contact area between the first surface and the second surface changes depending on pressure applied to the first member and the second member. The first insulating film and the second insulating film are configured such that one is positively charged and the other is negatively charged due to a change in the true contact area. Identifying the peaks includes identifying a first peak and a second peak that appears in pairs with the first peak. Specifying at least one of the values of the peaks or the interval between the peaks includes specifying at least one of a first interval that is an interval of the first peak, a second interval that is an interval of the second peak, or a time interval between the first peak and the second peak forming a pair.

According to an embodiment of the tire state estimation system, the system further includes at least two or more power generators and a power storage device. The power storage device is configured to store electric charges of some of the at least two or more power generators.

A part of the at least two or more power generators can be used as an energy source. Therefore, power for driving a mechanism inside the tire of the estimation system can be supplied inside the tire.

### ADVANTAGES OF THE INVENTION

According to the present invention, an estimation method and an estimation system of a wear state capable of accurately estimating a wear state of a tire even when a vehicle is traveling at a low speed are provided. Moreover, according to the present invention a method and a system for estimating a ground contact state of a tire are provided, which estimate the ground contact state of the tire. Estimating the ground contact state of the tire is useful for acquiring, for example, information regarding a wear state of the tire, information regarding a mounting state of the tire on a wheel, information regarding an air pressure of the tire, information regarding a wheel load of the tire, and the like.

### BRIEF DESCRIPTION OF THE DRAWINGS

Fig. 1 is a diagram illustrating an overall configuration of an estimation system according to an embodiment.
Fig. 2 is a block diagram illustrating an electrical configuration of the estimation system.
Fig. 3 is a cross-sectional view of a power generator according to an embodiment.
Fig. 4 is a diagram illustrating a charging principle of the power generator.
Fig. 5 is a schematic diagram illustrating a configuration of a module.
Fig. 6 is a cross-sectional view of a tire assembly.
Fig. 7 is another cross-sectional view of the tire assembly.
Fig. 8 is a diagram illustrating an arrangement example of the power generator.
Fig. 9 is a diagram for explaining an estimation principle.
Fig. 10 is a diagram illustrating a configuration of an experimental device.
Fig. 11 is a diagram for comparing ground contact surface shapes in a new state and a wear state.
Fig. 12 is a graph plotting dimensions of a ground contact surface under various conditions.
Fig. 13A is a graph of time comparison values.
Fig. 13B is a graph of peak comparison values.
Fig. 13C is a graph of time comparison values.
Fig. 13D is a graph of peak comparison values.
Fig. 13E is a graph of time comparison values.
Fig. 13F is a graph of peak comparison values.
Fig. 14 is a graph in which experimental data is plotted on a plane of time comparison value - peak comparison value.
Fig. 15 is a flowchart showing an example of estimation processing of a wear state.
Fig. 16 is a flowchart showing an example of estimation processing of a ground contact state.
Fig. 17A is a developed view of a tire assembly.
Fig. 17B is a diagram for explaining a rotational force generated in the tire assembly due to uneven distribution of mass.
Fig. 18A is a developed view of a tire assembly illustrating an example of arrangement of a power generator.
Fig. 18B is a cross-sectional view of the tire assembly of Fig. 18A as viewed from a rotation axis direction.
Fig. 18C is a developed view of the tire assembly illustrating an example of a T-shaped arrangement of the power generator.
Fig. 18D is a cross-sectional view of the tire assembly of Fig. 18C as viewed from the rotation axis direction.
Fig. 18E is a developed view of the tire assembly illustrating an example of a V-shaped arrangement of the power generator.
Fig. 18F is a cross-sectional view of the tire assembly of Fig. 18E as viewed from the rotation axis direction.
Fig. 18G is a developed view of the tire assembly illustrating an example of a W-shaped arrangement of the power generator.
Fig. 18H is a developed view of the tire assembly illustrating an example of a U-shaped arrangement of the power generator.
Fig. 18I is a development view of the tire assembly illustrating an example of an O-shaped arrangement of the power generator.
Fig. 18J is a developed view of the tire assembly illustrating an example of a two-dimensional arrangement of elements.
Fig. 19 is a development view of a tire assembly manufactured by an experiment.
Fig. 20A is a graph in which a measured ground contact surface shape and an estimated circumferential length are overlapped.
Fig. 20B is a graph in which the measured ground contact surface shape and the estimated circumferential length are overlapped.
Fig. 20C is a graph in which the measured ground contact surface shape and the estimated circumferential length are overlapped.
Fig. 20D is a graph in which the measured ground contact surface shape and the estimated circumferential length are overlapped.
Fig. 21 is a developed view of a tire assembly manufactured by another experiment.
Fig. 22 is a diagram for comparing voltage waveforms of respective piezoelectric elements.
Fig. 23A is a graph in which a measured ground contact surface shape and an estimated circumferential length are overlapped.
Fig. 23B is a graph in which the measured ground contact surface shape and the estimated circumferential length are overlapped.
Fig. 23C is a graph in which the measured ground contact surface shape and the estimated circumferential length are overlapped.
Fig. 23D is a graph in which the measured ground contact surface shape and the estimated circumferential length are overlapped.
Fig. 23E is a graph in which the measured ground contact surface shape and the estimated circumferential length are overlapped.
Fig. 24A is a graph plotting a position of a piezoelectric element and a peak comparison value.
Fig. 24B is a graph plotting a position of a piezoelectric element and a time comparison value.
Fig. 25 is a graph in which a ground contact surface shape measured at the time of wear and an estimated circumferential length are overlapped.
Fig. 26 is a graph in which a ground contact surface shape measured when new and an estimated circumferential length are overlapped.

### EMBODIMENTS OF THE INVENTION

Hereinafter, a wear state estimation method executed by a tire state estimation system according to an embodiment of the present invention and a ground contact state estimation method executed by the tire state estimation system will be described with reference to the drawings. As described below, since a wear state estimation system and a ground contact state estimation system have a common configuration, they can be configured using the same hardware resources as the tire state estimation system. Therefore, hereinafter, the wear state estimation system and the ground contact state estimation system are collectively referred to as an "estimation system". Furthermore, as described below, it may be possible to estimate the wear state of the tire at the same time as estimating the ground contact state of the tire based on the same data. Therefore, a method of estimating the wear state of the tire and the ground contact state of the tire will be described below while referring to a relationship between the wear state of the tire and the ground contact state of the tire.

### <1. Overview of estimation system>

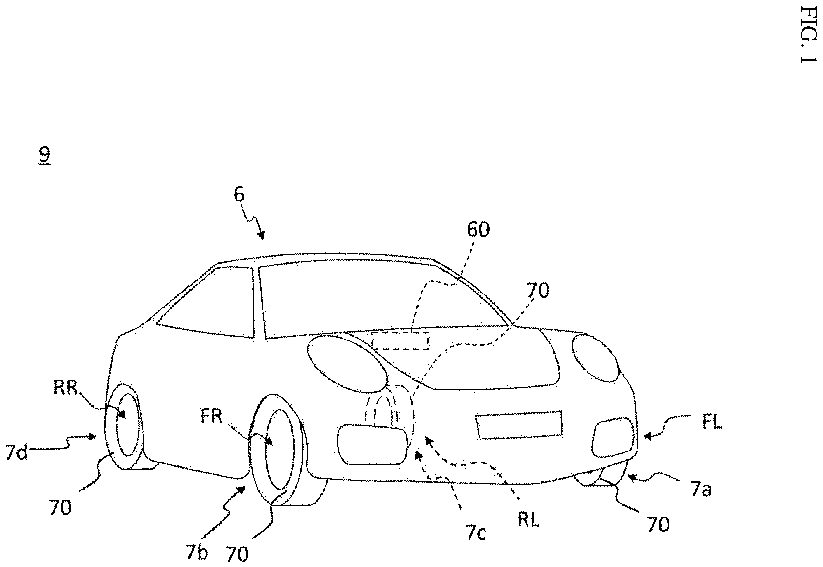

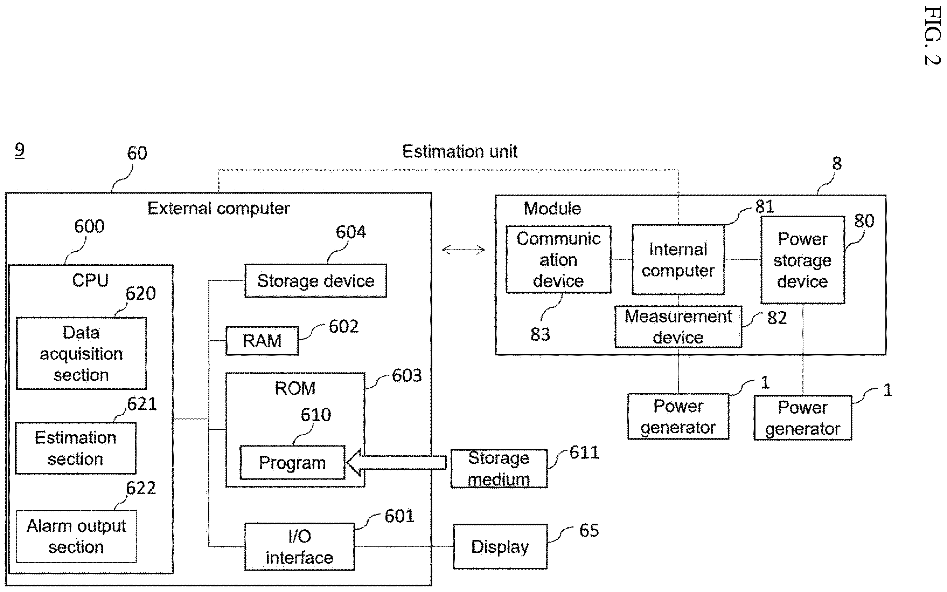

Fig. 1 is an overall configuration diagram of an estimation system 9 according to an embodiment, and Fig. 2 is a block diagram illustrating an electrical configuration of the estimation system. The estimation system 9 can be implemented on a vehicle 6 on which tire assemblies 7a to 7d are mounted. The type of the vehicle 6 is not particularly limited, but is, for example, a four-wheel vehicle, and includes a left front wheel FL, a right front wheel FR, a left rear wheel RL, and a right rear wheel RR. The tire assemblies 7a to 7d are mounted on the wheels FL, FR, RL, and RR of the vehicle 6, respectively. The tire assemblies 7a to 7d have different wheels to be attached, but have the same structure and function. Therefore, hereinafter, the tire assemblies 7a to 7d may be referred to as tire assembly 7 without distinguishing them. The vehicle 6 and the tire assembly 7 will be described later.

The estimation system 9 includes an external computer 60 disposed outside a tire 70 of the tire assembly 7. The external computer 60 is not particularly limited, but is, for example, an in-vehicle device mounted on the vehicle 6. The external computer 60 can wirelessly communicate with the tire assembly 7 of each wheel, and receives data collected in the tire assembly 7 by wireless communication. The external computer 60 is configured to estimate at least one of a wear state or a ground contact state of the tire based on the data received from the tire assembly 7. The external computer 60 of the present embodiment constitutes an estimation unit that estimates at least one of the wear state or the ground contact state of the tire together with an internal computer 81 to be described later.

The estimation system 9 further includes a power generator 1, the internal computer 81, a measurement device 82, and a communication device 83. These elements are disposed inside the tire 70 and constitute the tire assembly 7 described later. As will be described later, the power generator 1 is configured to generate a voltage using an impact transmitted from a road surface when the tire assembly 7 rotates on the road surface as the vehicle 6 travels. The voltage generated in the power generator 1 is measured by the measurement device 82 and output to the internal computer 81 as time-series measurement data. The internal computer 81 can transmit at least one of the measurement data or data processing of the measurement data to the external computer 60 via the communication device 83. The internal computer 81 of the present embodiment constitutes the estimation unit together with the external computer 60. Hereinafter, each configuration of the estimation system 9 will be described.

### <2. Vehicle>

### [External computer 60]

The vehicle 6 further includes the external computer 60. The external computer 60 is a general-purpose computer as hardware, and includes a CPU 600, an I/O interface 601, a RAM 602, a ROM 603, and a nonvolatile rewritable storage device 604. The I/O interface 601 is a communication device for performing wired or wireless communication with an external device such as a display 65 or the tire assembly 7. The ROM 603 stores a program 610 for controlling the operation of the estimation system 9. The program 610 is written in the ROM 603 from a storage medium 611 such as a CD-ROM or a USB memory. The CPU 600 virtually operates as a data acquisition section 620, an estimation section 621, and an alarm output section 622 by reading and executing the program 610 from the ROM 603. Details of the operation of each section will be described later. Note that a storage location of the program 610 may be the storage device 604 instead of the ROM 603. Furthermore, the RAM 602 and the storage device 604 are appropriately used for calculation of the CPU 600.

The storage device 604 includes a hard disk, a flash memory, or the like. In the storage device 604, at least one of data for estimating the wear state of the tire 70 or data for estimating the ground contact state of the tire 70 is stored in advance. The estimation section 621 refers to data stored in the storage device 604 as necessary, and estimates at least one of the wear state or the ground contact state of the tire 70.

### [Display]

The vehicle 6 further includes the display 65. A mode of the display 65 is not limited as long as various types of information can be displayed and conveyed to a user. For example, it can be realized in an arbitrary mode such as a liquid crystal monitor, a liquid crystal display element, an organic EL display, or a plasma display. An attachment position of the display 65 can be appropriately selected, but for example, it is desirable to provide the display at a position easily understood by a driver, such as on an instrument panel. In a case where the external computer 60 is connected to a car navigation system, a monitor for car navigation can be used as the display 65, and a multi-information display can be used as the display 65.

### <3. Power generator>

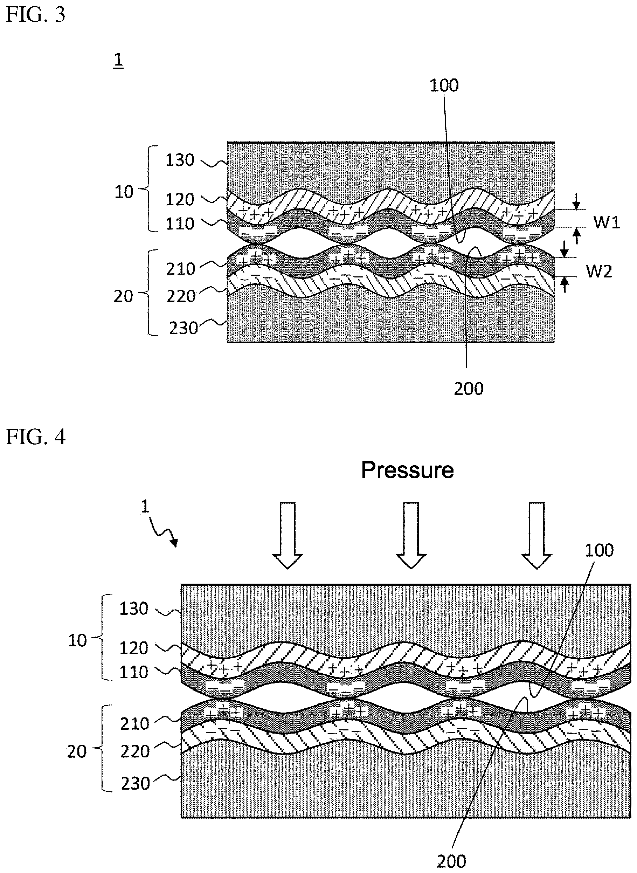

Fig. 3 is a cross-sectional view illustrating a configuration of the power generator 1. However, a direction of the power generator 1 at the time of use is not limited to the direction illustrated in Fig. 3. As illustrated in Fig. 3, the power generator 1 includes a first member 10 and a second member 20, and the members are stacked in this order. Although not limited thereto, for example, the power generator 1 has a square shape in plan view. A length of one square piece is not limited thereto, but can be set to about 10 mm to 100 mm. Moreover, the length of the square piece is preferably less than or equal to a ground contact length of the tire 70 on which the power generator 1 is disposed. Here, the ground contact length of the tire 70 is defined by a method described in Japanese Patent Laid-open Publication No. 2020-200012, which is a previous application by the present applicant.

### [First member]

The first member 10 includes a first base material 130, a first electrode 120, and a first insulating film 110. Each element of the first member 10 has a square shape having substantially the same dimension in plan view, and is stacked in this order from the outside to the inside of the power generator 1. These elements 110 to 130 may be fixed to one another. The first base material 130 is made of a flexible material or a viscoelastic material such as a resin or an elastomer so as to be deformable by receiving an external force. The first base material 130 of the present embodiment is made of silicone rubber. A large number of irregularities are formed on a surface of the first base material 130 on a side in contact with the first electrode 120. As a result, irregularities corresponding to the irregularities of the first base material 130 are reproduced on a first surface 100 formed by the first insulating film 110 via the first electrode 120.

The configuration of the irregularities of the first base material 130 is not particularly limited. For example, the irregularities may be formed regularly over a surface direction of the first base material 130, or may be formed randomly to some extent. Furthermore, a cross-sectional shape of the irregularities is also not particularly limited.

The first electrode 120 is a portion for extracting a charge generated in the first insulating film 110 to the outside of the power generator 1, and is disposed so as to be in contact with the first insulating film 110 on a back surface of the first surface 100. The first electrode 120 can be made of a material having conductivity, and examples of such a material include a conductive film such as Ag and Cu, a conductive cloth, and the like. The configuration of the conductive cloth is not particularly limited, but the conductive cloth may be an organic fiber cloth made of a polymer material plated with metal, a fiber made of a polymer material mixed with metal fibers, or the like. The first electrode 120 has flexibility and can be deformed following deformation of the first base material 130. Furthermore, the first electrode 120 reproduces irregularities corresponding to the irregularities of the first base material 130 on a surface in contact with the first insulating film 110.

The first insulating film 110 is a film made of an insulator and has flexibility. In the present embodiment, a surface of the first insulating film 110 opposite to the first electrode 120 corresponds to the first surface 100. On the first surface 100, irregularities corresponding to the irregularities of the first base material 130 are formed by the first base material 130. The first surface 100 faces a second surface 200 formed by a second insulating film 210 described later and is in contact with the second surface 200. When a true contact area, which is a substantial contact area between the first surface 100 and the second surface 200, changes due to pressure applied to the power generator 1, the first insulating film 110 is charged to a polarity opposite to that of the second insulating film 210. That is, in a case where the second insulating film 210 is positively charged, the first insulating film 110 is negatively charged. Furthermore, in a case where the second insulating film 210 is negatively charged, the first insulating film 110 is positively charged.

The ten-point average roughness of the first surface 100 is preferably 100 µm or more and 2 mm or less. Note that the ten-point average roughness is measured according to JIS B 0601: 2001.

Note that in a case where the first surface 100 and the second surface 200 are referred to as "in contact", it is sufficient that the first surface 100 and the second surface 200 are partially in contact with each other, and there may be a portion where the first surface 100 and the second surface 200 are not in contact with each other. The power generator 1 is configured such that the first surface 100 and the second surface 200 entirely overlap. That is, in the power generator 1, one surface of the first insulating film 110 and one surface of the second insulating film 210 are entirely in contact with each other.

### [Second member]

The second member 20 includes a second base material 230, a second electrode 220, and the second insulating film 210. Each element of the second member 20 has a square shape similar to that of the first member 10 in plan view, and is stacked in this order from the outside to the inside of the power generator 1. These elements 210 to 230 may be fixed to one another. Similarly to the first base material 130, the second base material 230 is made of a flexible material or a viscoelastic material such as a resin or an elastomer so as to be deformable by receiving an external force. The second base material 230 of the present embodiment is made of silicone rubber. A large number of irregularities are formed on a surface of the second base material 230 on a side in contact with the second electrode 220. As a result, irregularities corresponding to the irregularities of the second base material 230 are reproduced on the second surface 200 formed by the second insulating film 210 via the second electrode 220.

The configuration of the irregularities of second base material 230 is not particularly limited. For example, the irregularities may be formed regularly over a surface direction of the second base material 230, or may be formed randomly to some extent. Furthermore, a cross-sectional shape of the irregularities is also not particularly limited.

The second electrode 220 is a portion for extracting a charge generated in the second insulating film 210 to the outside of the power generator 1, and is disposed so as to be in contact with the second insulating film 210 on a back surface of the second surface 200. The second electrode 220 can be made of a material having conductivity, and examples of such a material include a conductive film such as Ag and Cu, a conductive cloth, and the like. The configuration of the conductive cloth is not particularly limited, but the conductive cloth may be an organic fiber cloth made of a polymer material plated with metal, a fiber made of a polymer material mixed with metal fibers, or the like. The second electrode 220 has flexibility and can be deformed following deformation of the second base material 230. Furthermore, the second electrode 220 reproduces irregularities corresponding to the irregularities of the second base material 230 on a surface in contact with the second insulating film 210.

The second insulating film 210 is a film made of an insulator different from the first insulating film 110, and has flexibility. In the present embodiment, a surface of the second insulating film 210 opposite to the second electrode 220 corresponds to the second surface 200. On the second surface 200, irregularities corresponding to the irregularities of the second base material 230 are formed by the second base material 230. The second surface 200 faces the first surface 100 formed by the first insulating film 110 and is in contact with the first surface 100. When the true contact area between the first surface 100 and the second surface 200 changes due to pressure applied to the power generator 1, the second insulating film 210 is charged with the polarity opposite to that of the first insulating film 110. That is, in a case where the first insulating film 110 is positively charged, the second insulating film 210 is negatively charged. Furthermore, in a case where the first insulating film 110 is negatively charged, the second insulating film 210 is positively charged. As a result, a voltage is generated in the power generator 1.

The ten-point average roughness of the second surface 200 is preferably 100 µm or more and 2 mm or less. Note that the ten-point average roughness is measured according to JIS B 0601: 2001.

### [Material]

The material constituting the first insulating film 110 and the second insulating film 210 can be selected from the group consisting of, for example, diamond-like carbon (DLC), perfluoropolyether, polymethyl methacrylate, nylon, polyvinyl alcohol, polyester, polyisobutylene, polyurethane (PU), polyethylene terephthalate, polyvinyl butyral, polychloroprene, natural rubber, polyacrylonitrile, polydiphenol carbonate, polyether chloride, polyvinylidene chloride, polystyrene, polyethylene, polypropylene, polyimide, polyvinyl chloride, polydimethylsiloxane, polytetrafluoroethylene, ethylene tetrafluoride and propylene hexafluoride copolymers, tetrafluoroethylene-hexafluoropropylene copolymers (FEP), and other materials containing a fluorocarbon organic substance as a main component.

From the viewpoint of less wear due to frictional contact, it is preferable to select a material containing DLC having high hardness and a low friction coefficient or fluorocarbon organic matter having high lubricity as a main component among the above-described group. Furthermore, from the viewpoint of increasing the voltage of the power generator 1, it is preferable to select a pair of materials farther away on the charged row among the group described above. Note that either the first insulating film 110 or the second insulating film 210 may be positively charged and either may be negatively charged.

In the present embodiment, the first insulating film 110 is made of polyimide, and the second insulating film 210 is made of nylon. As a result, in the present embodiment, the first insulating film 110 becomes the negatively charged insulating film, and the second insulating film 210 becomes the positively charged insulating film.

### [Thickness]

At least one of a thickness W1 of the first insulating film 110 or a thickness W2 of the second insulating film 210 is preferably 20 µm or less. Furthermore, both the thickness W1 and the thickness W2 are more preferably 20 µm or less. Note that the drawings do not necessarily reflect actual dimensions of each element of the power generator 1.

### [Charging principle of power generator 1]

The first insulating film 110 and the second insulating film 210 are charged by operating as follows. As illustrated in Fig. 3, both the first surface 100 and the second surface 200 of the present embodiment have irregularities, and are not completely separated even in a state where no pressure from the outside is applied to the power generator 1, leaving a portion in contact with each other. At this time, a distance (average surface interval) between an average surface of the first surface 100 and an average surface of the second surface 200 is relatively large, which is equivalent to the fact that the true contact area between the first surface 100 and the second surface 200 is relatively small.

Next, when pressure is applied to the power generator 1 so that the first insulating film 110 and the second insulating film 210 are closer to each other, the shapes of the first surface 100 and the second surface 200 change as illustrated in Fig. 4, the irregularities become slightly flat, and the average surface interval decreases. In other words, the true contact area increases. Moreover, when the pressure applied to the power generator 1 is removed, the first insulating film 110 and the second insulating film 210 are separated again, and the average surface interval increases. In other words, the true contact area is reduced. In this way, when the true contact area changes, a charge amount of the first insulating film 110 and the second insulating film 210 increases from the initial state, and more charges are induced to the first electrode 120 and the second electrode 220. Thus, a voltage is generated in the power generator 1. In the tire assembly 7, the tire 70 rotates on the road surface, and the impact from the road surface is transmitted to the power generator 1, so that the true contact area increases or decreases. That is, the power generator 1 is configured to convert vibration energy of the tire 70 into electrical energy to generate power.

Note that in the configuration in which the irregularities are formed on at least one of the first surface 100 or the second surface 200, the true contact area changes to some extent also by the relative movement of the first insulating film 110 and the second insulating film 210 in the surface direction. Therefore, among the forces applied to the power generator 1, not only the force in the direction of increasing or decreasing the average surface interval but also the force by which the first insulating film 110 and the second insulating film 210 slide relative to each other in the surface direction also contribute to the power generation of the power generator 1.

### <4. Module>

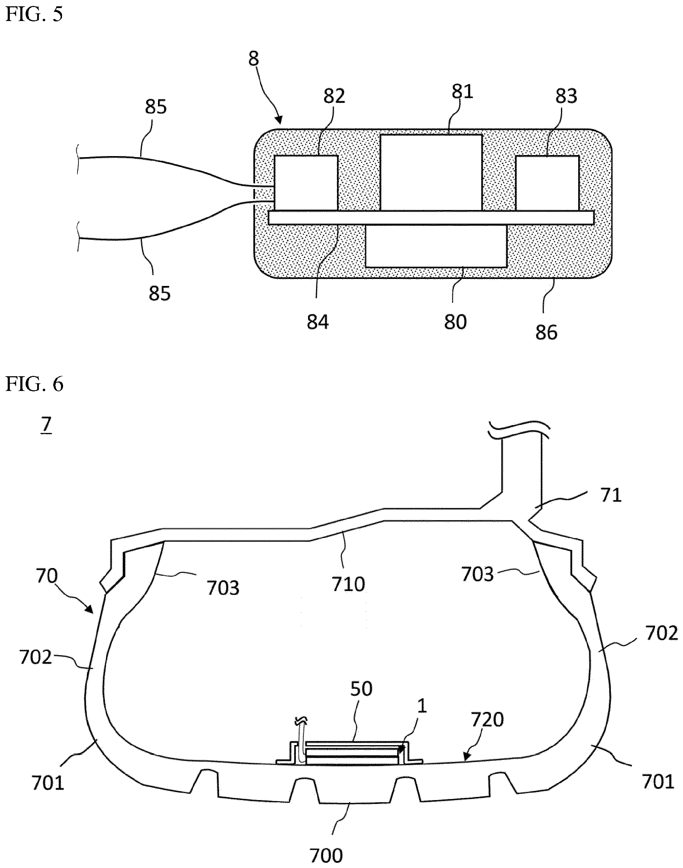

The power generator 1 is electrically connected to a module 8. The module 8 is disposed inside the tire 70, and constitutes the tire assembly 7 together with the power generator 1. Fig. 5 is a schematic diagram illustrating a configuration of the module 8. The module 8 includes, but is not limited to, the internal computer 81, the measurement device 82, the communication device 83, and a power storage device 80 mounted on a printed board 84. These elements are integrally sealed in an epoxy resin 86 except for lead wires 85 and 85 extending from the measurement device 82. As a result, each of the elements 80 to 84 is prevented from being affected by water vapor in the tire 70 and is also protected from impact. As also illustrated in Fig. 2, the measurement device 82, the communication device 83, and the power storage device 80 are electrically connected to the internal computer 81.

### [Measurement device]

The measurement device 82 is a device for measuring a voltage generated in the power generator 1, and is electrically connected to the power generator 1. The first electrode 120 and the second electrode 220 of the power generator 1 are connected to the measurement device 82 by the lead wires 85 and 85. Here, the tire assembly 7 may include one or a plurality of the power generators 1, but one measurement device 82 may be connected to the plurality of power generators 1, or a plurality of the measurement devices 82 may be connected to the individual power generators 1. The measurement device 82 can include, but is not limited to, an input impedance adjustment circuit, an input gain bias circuit, an analog/digital converter, and the like. A time-series voltage generated in the power generator 1 is measured by the measurement device 82, converted into a digital signal, and output to the internal computer 81 as time-series measurement data.

### [Power storage device]

The tire assembly 7 may optionally include not only the power generator 1 for collecting measurement data but also the power generator 1 for supplying power. In this case, the tire assembly 7 can include the power storage device 80 connected to the power generator 1 for supplying power. The power storage device 80 may include, but is not limited to, a rectifier, a capacitor, a power supply controller, and the like. The power storage device 80 is configured to store charges induced in the power generator 1 and release the stored charges as necessary. As a result, power is supplied to the internal computer 81 and the communication device 83 using the voltage generated in the power generator 1, and the power for operating the module 8 can be covered inside the tire assembly 7. The power allocation control may be performed by the internal computer 81.

### [Internal computer]

The internal computer 81 is a general-purpose microcomputer as hardware, and includes a processor, a main memory, and a nonvolatile rewritable storage device. In the storage device of the internal computer 81, a program for controlling the operation of the module 8 and a program for performing data processing on the measurement data are written, and these programs are executed by a processor. As described above, the internal computer 81 controls the operation of the power storage device 80 and uses charges stored in the power storage device 80 as necessary. Furthermore, the internal computer 81 performs data processing on the measurement data acquired from the measurement device 82, and transmits a result thereof to the external computer 60 at a predetermined cycle via the communication device 83. The data processing by the internal computer 81 will be described later.

### [Communication device]

The communication device 83 enables the internal computer 81 to wirelessly transmit and receive data to and from a device outside the tire assembly 7. The communication device 83 may be a general-purpose communication module including an antenna.

### <5. Tire assembly>

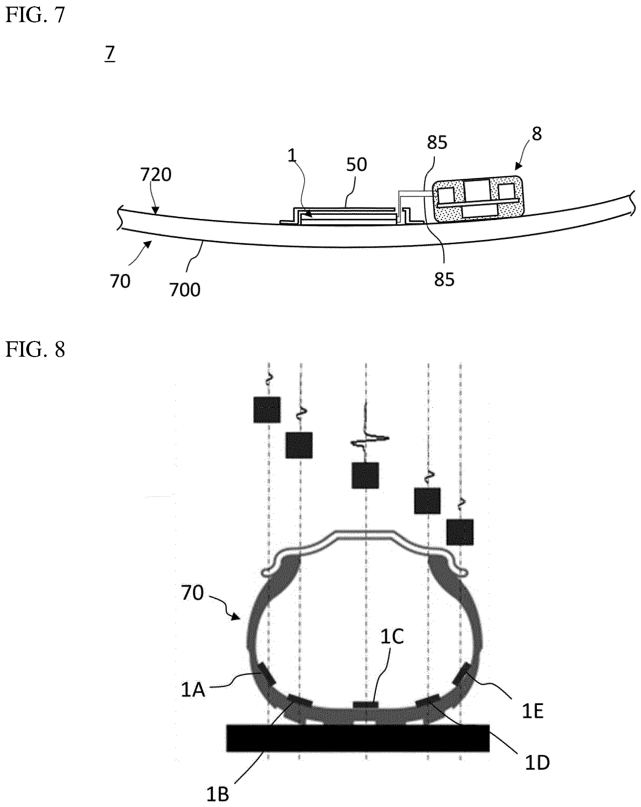

Hereinafter, the configuration of the tire assembly 7 will be described with reference to the drawings. Figs. 6 and 7 are schematic partial cross-sectional views of the tire assembly 7. Fig. 6 illustrates a cross section of the tire assembly 7 cut along a plane including a rotation axis of the tire assembly 7. Fig. 7 illustrates a cross section of the tire assembly 7 taken along a plane passing through a center of a tread portion 700 of the tire assembly 7 and perpendicular to the rotation axis of the tire assembly 7. In Fig. 7, a direction from the back to the front of the paper surface or a direction from the front to the back of the paper surface is parallel to the rotation axis of the tire assembly 7. Note that the dimensions of the respective elements in the drawings may be exaggerated for convenience of description, and do not necessarily represent actual dimensions and magnitude relationships.

### [Tire]

As illustrated in Figs. 6 and 7, the tire assembly 7 further includes the tire 70 and a cover body 50 in addition to the power generator 1 and the module 8 described above. The tire 70 is made of vulcanized rubber or the like and has elasticity. As illustrated in Fig. 6, the tire 70 includes the tread portion 700, a shoulder portion 701, a sidewall portion 702, and a bead portion 703. The tread portion 700 is a portion that defines a side peripheral surface of the tire assembly 7, and moves the vehicle 6 forward by coming into contact with a road surface and generating friction. The shoulder portion 701 is a portion adjacent to the tread portion 700 and the sidewall portion 702. The sidewall portion 702 bends and flexes to absorb an impact from the road surface. The bead portion 703 incorporates a bead wire (not illustrated) therein, and is fixed to a wheel rim 710 formed at a peripheral portion of a wheel 71.

### [Cover body]

The power generator 1 is disposed on an inner side surface 720 of the tire 70. The cover body 50 is a member disposed on the inner side surface 720 so as to cover the entire power generator 1, and an outer peripheral portion thereof is fixed to the inner side surface 720 in a state where the power generator 1 is sandwiched between the cover body and the inner side surface 720. Accordingly, the power generator 1 is fixed to the inner side surface 720. The cover body 50 is preferably made of a material having elasticity, and more preferably made of a material having heat resistance, impact resistance, and durability. Examples of such a material include an elastomer. The cover body 50 is not limited to this, but a member for tire repair mainly made of an elastomer and incorporating a layer of a reinforcing cord can be used. The method for fixing the cover body 50 to the inner side surface 720 is not particularly limited, and adhesion by an adhesive, adhesion by vulcanization, or the like can be appropriately selected.

### [Arrangement]

The power generator 1 may be disposed such that the first member 10 faces the inner side surface 720 of the tire 70 and the second member 20 faces the cover body 50, or such that the second member 20 faces the inner side surface 720 of the tire 70 and the first member 10 faces the cover body 50. Furthermore, the number of power generators 1 to be disposed and the positions on the inner side surface 720 where the power generators 1 are disposed are not particularly limited, but from the viewpoint of accurately estimating the wear and ground contact state of the tire, for example, as illustrated in Fig. 8, the five power generators 1 can be disposed at different positions on the inner side surface 720. For convenience of description, in Fig. 8, the five power generators 1 are referred to as power generators 1A to 1E to be distinguished. The power generators 1A to 1E may have a common configuration, or may have different dimensions, for example.

In Fig. 8, the power generators 1A to 1E are disposed in this order along a width direction of the tire 70. The middle power generator 1C is disposed such that a center line thereof coincides with a center line of the tread portion 700, and the power generators 1B and 1D and the power generators 1A and 1E are disposed at positions in the width direction symmetrical to each other with respect to a center line (center line representing a center of the ground contact surface in the width direction) of the tread portion 700. The power generators 1B and 1D are disposed at positions (on the inner side surface 720) corresponding to edges on both sides in the width direction of the ground contact surface when the tire 70 is new. Each of the power generators 1A and 1E is disposed at a position corresponding to the outside in the width direction (on the inner side surface 720) with respect to a width of the ground contact surface when the tire 70 is in a new state. Note that the power generators 1A to 1E may be disposed at the same position or different positions in a circumferential direction of the tire 70. The reason for disposing the power generators 1A to 1E in this manner will be described later.

The module 8 is disposed outside the cover body 50 and inside the tire 70. The position where the module 8 is disposed is not particularly limited as long as the module 8 is connected to the power generator 1 by the lead wire 85, and the module 8 can be disposed at an appropriate position on the inner side surface 720 or on the surface of the cover body 50. The position of the module 8 is preferably fixed so as not to be disconnected from the power generator 1. The fixing method is not particularly limited, and a known method such as a method using an adhesive tape or a method using an adhesive can be selected.

### <6. Operation of tire assembly>

Hereinafter, the operation of the tire assembly 7 will be described. In a state where the tire assembly 7 is stationary, the average surface interval and the true contact area between the first surface 100 of the first insulating film 110 and the second surface 200 of the second insulating film 210 of the power generator 1 do not change or hardly change. Therefore, no charge is induced or hardly induced in the first electrode 120 and the second electrode 220, and the voltage of the power generator 1 measured by the measurement device 82 is 0 or minute.

When the tire assembly 7 rotates on the road surface, the tire 70 receives an impact at a portion in contact with the road surface. When this impact is transmitted to the entire tire 70, the impact is absorbed, so that deflection particularly occurs in the sidewall portion 702, and the entire tire 70 is deformed. After that, the sidewall portion 702 tries to return from the deformation, but receives an impact from the road surface again through another portion of the tread portion 700. In this manner, the tire 70 repeats expansion and contraction deformation as a whole. The expansion and contraction deformation of the tire 70 is transmitted to the power generator 1 disposed on the inner side surface 720 of the tire 70. The power generator 1 is deformed corresponding to the transmitted expansion and contraction deformation of the tire 70. As a result, the first insulating film 110 and the second insulating film 210 come close to or away from each other, or the relative position between the first insulating film 110 and the second insulating film 210 deviates in the surface direction, so that the average surface interval and the true contact area change. In this way, charges are induced to the first electrode 120 and the second electrode 220, and a voltage larger than that when the tire assembly 7 is stationary is measured by the measurement device 82.

During one rotation of the tire assembly 7, the impact applied to the tire 70 is best transmitted to the power generator 1 when the fixed position of the power generator 1 becomes a position where the tire 70 starts to be grounded (grounding start position) and when the tire 70 finishes being grounded (grounding separation position). At the grounding start position, the power generator 1 reaches the lowermost position, and at the grounding separation position, the power generator 1 separates from the lowermost position. At these positions, the time change of the average surface interval of the power generator 1 becomes the largest. Since the magnitude of the current extracted from the power generator 1 is proportional to the time change in the average surface interval between the first surface 100 and the second surface 200, the measurement data of the voltage generated in the power generator 1 reflects the degree of the impact transmitted to the power generator 1 and the grounding start time and the grounding separation time of the tire 70.

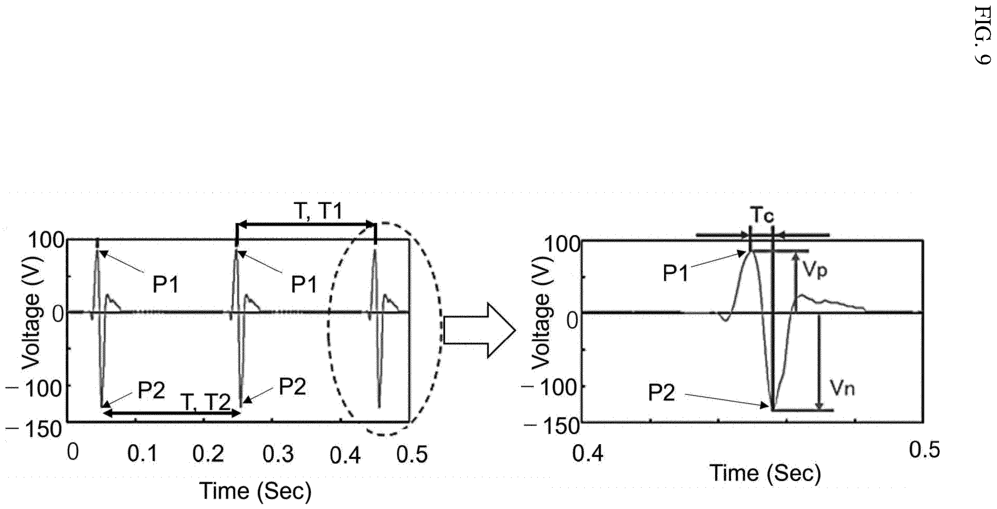

Fig. 9 is a graph supporting this. This graph is a graph in which the tire assembly 7 is rotated at a constant speed by an experimental device and the time-series voltage of the power generator 1 is measured. Since the power generator 1 repeatedly receives an impact from the road surface as the tire 70 rotates, a peak repeatedly appears in the voltage waveform of the power generator 1 as illustrated in the left graph of Fig. 9. Therefore, the time interval T from the appearance of the peak to the appearance of the next peak indicates a rotational speed of the tire 70. The graph on the right side of Fig. 9 is a graph in which one peak is enlarged. As illustrated in this graph, each peak repeatedly appearing in the voltage waveform of the power generator 1 includes a first peak P1 and a second peak P2 having a polarity opposite to the first peak P1. The first peak P1 is a peak of a positive voltage having an absolute value Vp, and corresponds to the grounding start time. The second peak P2 is a peak of a negative voltage having an absolute value Vn and corresponds to the grounding separation time. Therefore, the first peak P1 and the second peak P2 appear in pairs. The absolute value Vp is an example of a first peak value, and the absolute value Vn is an example of a second peak value. Hereinafter, Vp may be referred to as a first peak value, Vn may be referred to as a second peak value, and these may be collectively referred to as a peak value. Hereinafter, a principle in which the wear state and the ground contact state of the tire 70 can be estimated from such a voltage waveform of the power generator 1 will be described.

### <7. Estimation principle>

When the tread portion 700 of the tire 70 wears, the rigidity of the tire 70 decreases. When the rigidity decreases, the distribution of the load applied to the tire 70 changes, and thus the shape of the ground contact surface of the tire 70 changes. That is, the circumferential length and the width length of the ground contact surface change. This causes a change in how the impact from the road surface is transmitted to the power generator 1, and this change is also reflected in the measurement data. Therefore, changes in the circumferential length and the width length of the ground contact surface can be estimated based on the change in the measurement data of the power generator 1, and the ground contact state of the tire 70 can be estimated. When other conditions under which the ground contact state of the tire 70 changes are constant, the wear state of the tire 70 can be estimated based on the change in the ground contact state.

### [Circumferential length of ground contact surface]

Fig. 9 is referred to again. A time interval Tc from the appearance of the first peak P1 to the appearance of the next second peak P2 during one rotation of the tire 70 indicates a time during which the tire 70 advances by the circumferential length of the ground contact surface. That is, the time interval Tc corresponds to the circumferential length of the ground contact surface of the tire 70, and the time interval T corresponds to a perimeter of the tire 70. From this, a ratio Tc/T of the time interval Tc to the time interval T can represent a ratio of the circumferential length of the ground contact surface of the tire 70 to the perimeter of the tire 70 in the internal pressure, the rotational speed, and the wheel load of the tire 70 at that time. As the time interval T, either a first interval T1 which is an interval between the first peaks P1 or a second interval T2 which is an interval between the second peaks P2 can be adopted. Therefore, the ratio Tc/T is an example of a time comparison value for comparing the time interval Tc with the first interval T1 or the second interval T2.

By comparing the time comparison value Tc/T with the time comparison value Tc/T of the tire 70 in an initial use state which is a new state or a state close thereto, it is possible to estimate whether or not the circumferential length of the ground contact surface has changed. The change in the time comparison value Tc/T can be caused not only by wear of the tire 70 but also by a change in air pressure, a change in rotational speed, and a change in wheel load of the tire 70. Therefore, in a case where the wear state of the tire 70 is estimated based on this, it is preferable that at least one of the internal pressure, the rotational speed, or the wheel load of the tire 70 is separately acquired and compared with the time comparison value Tc/T of the tire 70 at the initial use acquired under a condition equivalent thereto or a condition relatively close thereto. Furthermore, depending on the type of the tire 70, it is considered that the circumferential length of the ground contact surface may become longer or shorter when worn. Therefore, in the case of estimating the wear state of the tire 70, it is preferable to specify in advance in which direction the circumferential length of the ground contact surface changes when the tire 70 included in the estimation system 9 wears.

The time comparison value Tc/T of the tire 70 in the initial use state for various internal pressure, rotational speed, and wheel load conditions may be acquired during actual traveling of the vehicle 6, or may be acquired in advance by experiment or simulation. These obtained values may be stored in the storage device 604 of the external computer 60, for example. Furthermore, a threshold for estimating that the circumferential length of the ground contact surface has changed, a threshold for estimating that the tire 70 is in a wear state, or data defining these thresholds can be determined in advance by experiment or simulation. The threshold value or data defining the threshold value may be stored in advance in the storage device 604 of the external computer 60, similarly to the time comparison value Tc/T of the tire 70 in the initial use state.

Moreover, assuming that a change in the perimeter of the tire 70 is negligibly small with respect to a change in the circumferential length of the ground contact surface of the tire 70, it is possible to estimate the circumferential length of the ground contact surface of the tire 70 at the internal pressure, the rotational speed, and the wheel load at that time by calculating (perimeter of the tire 70) × (Tc/T). The perimeter of the tire 70 can be calculated from, for example, the diameter of the tire 70 in a new state. Estimating the circumferential length of the ground contact surface of the tire 70 is included in estimating the ground contact state of the tire 70. In addition, whether or not the tire 70 is worn may be estimated by comparing the estimated circumferential length of the ground contact surface with the circumferential length of the ground contact surface of the tire 70 at the initial stage of use under the same internal pressure, rotational speed, and wheel load. In this case, the circumferential length of the ground contact surface of the tire 70 at the initial use may be specified in advance for various internal pressure, rotational speed, and wheel load conditions by experiment or simulation, and these values may be stored in the storage device 604 of the external computer 60, for example.

The threshold for estimating that the circumferential length of the ground contact surface has changed, the threshold for estimating that the tire 70 is in a wear state, or data defining these thresholds can be determined in advance for various conditions of internal pressure, rotational speed, and wheel load by experiment or simulation. The threshold value or data defining the threshold value may be stored in the storage device 604 of the external computer 60 in advance, similarly to the circumferential length of the ground contact surface of the tire 70 in the initial use state.

As described above, in a case where the wear state of the tire 70 is estimated on the basis of the change in the ground contact state of the tire 70, it is preferable that the conditions of the internal pressure, the rotational speed, and the wheel load of the tire are known in some way, and comparison with the time comparison value Tc/T of the new tire 70 or the circumferential length of the ground contact surface under the same conditions or near conditions can be performed. Otherwise, it is preferable to use an index which is hardly affected by the air pressure and the wheel load together with the time comparison value Tc/T. Examples of such an index include a peak comparison value described later.

### [Width length of ground contact surface]

In order to detect the change in a width length of the ground contact surface, it is conceivable to dispose a plurality of power generators 1A to 1E along the width direction of the tire 70 as illustrated in Fig. 8. For example, when the width length of the ground contact surface of the tire 70 becomes longer than that in the initial use state, and a portion that is not grounded in the initial use state comes to be grounded, the first peak value Vp and the second peak value Vn of the power generator 1 at that position remarkably increase from the initial use value. The power generators 1A and 1E in Fig. 8 are disposed by utilizing this. That is, the peak values Vp and Vn of the power generators 1A and 1E are the magnitude of the noise level as compared with the peak values of the other power generators 1B to 1D at the initial use of the tire 70, but if this is remarkably increased, it can be estimated that the width length of the ground contact surface of the tire 70 is increased. Therefore, the position in the width direction where the power generators 1A and 1E are disposed is preferably a position corresponding to an increase in the width length of the ground contact surface of the tire 70, which is assumed in advance by an experiment, a simulation, or the like.

Furthermore, contrary to the above example, when the width length of the ground contact surface of the tire 70 becomes shorter than that in the initial use state, and the portion that is grounded in the initial use state is not grounded, both the first peak value Vp and the second peak value Vn of the power generator 1 at the position are remarkably reduced than those in the initial use state. The power generators 1B and 1D of Fig. 8 are disposed at the edge in the width direction of the ground contact surface when the tire 70 is in a new state by using this fact. That is, the peak values Vp and Vn of the power generators 1B and 1D fall within a certain range as compared with the peak values Vp and Vn of the power generator 1C at the initial stage of use of the tire 70, but if the peak values Vp and Vn are significantly reduced as compared with the peak values Vp and Vn of the power generator 1C, it can be estimated that the width length of the ground contact surface of the tire 70 is shortened.

As described above, in any of the examples described above, the ground contact state of the tire 70 can be estimated by comparing the peak values Vp and Vn of the target power generator 1 with the initial use value of the tire 70. Furthermore, in a case where the wear state of the tire 70 is estimated based on the change in the ground contact state, it is preferable to specify in advance in which direction the width length of the ground contact surface changes when the tire 70 wears. If the width length is shortened when the tire 70 is worn, the peak values Vp and Vn of the power generator disposed at the edge in the width direction of the ground contact surface of the tire 70 when the tire is in a new state are remarkably decreased, so that it can be estimated that the tire 70 is in a wear state. On the other hand, if the width length becomes longer when the tire 70 is worn, the peak values Vp and Vn of the power generator disposed on the outer side in the width direction than the width of the ground contact surface of the tire 70 in the new state remarkably increase, so that it can be estimated that the tire 70 is in a wear state.

The peak values Vp and Vn at the initial use stage of the tire 70 may be acquired, for example, during actual traveling of the vehicle 6, or may be acquired by an experiment or simulation using the same type of tire 70. Furthermore, these values may be acquired for each condition of various internal pressures, rotational speeds, and wheel loads of the tire 70. A threshold for estimating whether or not the width length of the ground contact surface has changed and whether or not the tire 70 has worn or data defining the threshold can be determined in advance by experiment or simulation. The wear state and the ground contact state can be estimated by storing the threshold or data defining the threshold in the storage device 604 of the external computer 60 together with the peak values Vp and Vn at the initial use of the tire 70.

Note that when the power generators 1 are disposed more densely in the width direction and the positions of the power generators 1 in the width direction are stored, the width length of the ground contact surface of the tire 70 can be estimated based on the peak values Vp and Vn of the power generators 1. That is, it is possible to estimate whether or not the portion where the power generator 1 is located is grounded from changes in the peak values Vp and Vn of the power generators 1. It can be estimated that the distance between the two power generators 1 that are most separated in the width direction among the power generators 1 located in the portion to be grounded is the width length of the ground contact surface.

### [Unbalance of ground contact surface]

Meanwhile, the power generators 1A to 1E are disposed at positions symmetrical in the width direction with respect to the center line of the tread portion 700, but even in a case where the power generator 1 is disposed only on one side with respect to the center line of the tread portion 700, it is possible to estimate the change in the length of the ground contact surface in the width direction. That is, when at least one power generator 1 is disposed at a position outside the width of the ground contact surface of the tire 70 in a new state, a change in the width length can be estimated. Furthermore, when at least one power generator 1 is disposed at the edge in the width direction of the ground contact surface of the tire 70 in a new state, a change in the width length can be estimated.

However, when the power generators 1 are disposed such that the positions in the width direction are symmetrical with respect to the center line of the tread portion 700, more information on the ground contact state of the tire 70 can be obtained by comparing the measurement data of the pair of power generators 1 at the symmetrical positions and comparing these measurement data with the measurement data of the power generator 1 at the center in the width direction. For example, the peak values Vp and Vn of the pair of power generators 1 located at the symmetrical positions are compared with each other, and in a case where one of the peak values Vp and Vn is significantly larger than the other peak value Vp or Vn, it is estimated that the tire 70 is biased in the width direction and grounded. Furthermore, the peak values Vp and Vn of the power generator 1 at the center in the width direction are compared with the peak values Vp and Vn of the power generator 1 on the outer side in the width direction, and in a case where the former is significantly larger than the latter, it is estimated that the tire 70 is biased to the center in the width direction and grounded. On the other hand, in a case where the latter is significantly larger than the former, it is estimated that the tire 70 is biased outward in the width direction and the central portion in the width direction is relatively out of contact with the ground.

The unbalance of the ground contact of the tire 70 in the width direction is caused by, for example, an attachment posture of the tire assembly 7 to the wheel shaft, pressure reduction of the tire 70, high pressure of the tire 70, uneven wear of the tire 70, and the like. Specifically, when the tire assembly 7 is attached in a state where the rotation axis of the tire assembly 7 is inclined with respect to the wheel axis of the vehicle 6, the tread portion 700 is inclined in one direction with respect to the road surface, so that the inner portion or the outer portion of the tread portion 700 in the width direction is intensively grounded. Furthermore, when the tire 70 is in a depressurized state, the vicinity of the center in the width direction of the tread portion 700 is recessed radially inward, and the vicinity of the outer side in the width direction of the tread portion 700 is intensively grounded. When the tire 70 is in an excessively high pressure state, the vicinity of the center in the width direction of the tread portion 700 protrudes outward in the radial direction from the other portions, and the vicinity of the center in the width direction of the tread portion 700 is intensively grounded. These factors also cause uneven wear in which the tire 70 is worn unevenly in the width direction. Furthermore, in a case where the unbalance of the ground contact of the tire 70 in the width direction occurs although factors such as the mounting posture and the improper air pressure of the tire 70 are not found, it is estimated that the tire 70 is unevenly worn. Therefore, it can be said that estimating the unbalance of the ground contact of the tire 70 as the ground contact state of the tire 70 is also estimating the state of uneven wear and the ground contact state in which uneven wear may occur.

### [Peak comparison value]

According to findings by the inventors, when the rigidity of the tire 70 decreases due to wear or the like, the second peak value Vn at the time of separation from grounding tends to be smaller than the first peak value Vp at the start of grounding. Therefore, when the tire 70 wears, Vp/Vn, which is a ratio of peak values, increases, or Vn/Vp decreases. As a result, the wear state of the tire 70 can be estimated based on the change in Vp/Vn or Vn/Vp. Vp/Vn and Vn/Vp are examples of peak comparison values for comparing the first peak value with the second peak value. It has been confirmed by the following experiments that the peak comparison value is an index that is hardly affected by the air pressure, the rotational speed, and the wheel load.

### [Experiment]

The inventors confirmed by the following experiment that the shape of the ground contact surface changes when the tire 70 wears and that the wear state of the tire 70 can be estimated based on the measurement data of the power generator 1. First, four types of tires TY1 to TY4 having the same type of tire (size: 145/80R12) and having different wear states of the tread portion were prepared. The tire TY1 was brand new and the tread groove depth had an average depth of 5.63 mm. The tire TY2 was slightly worn, and the tread groove had an average depth of 4.82 mm. The tire TY3 was heavily worn, and the tread groove had an average depth of 2.29 mm. The tire TY4 was the most worn, and the tread groove had an average depth of 1.94 mm.

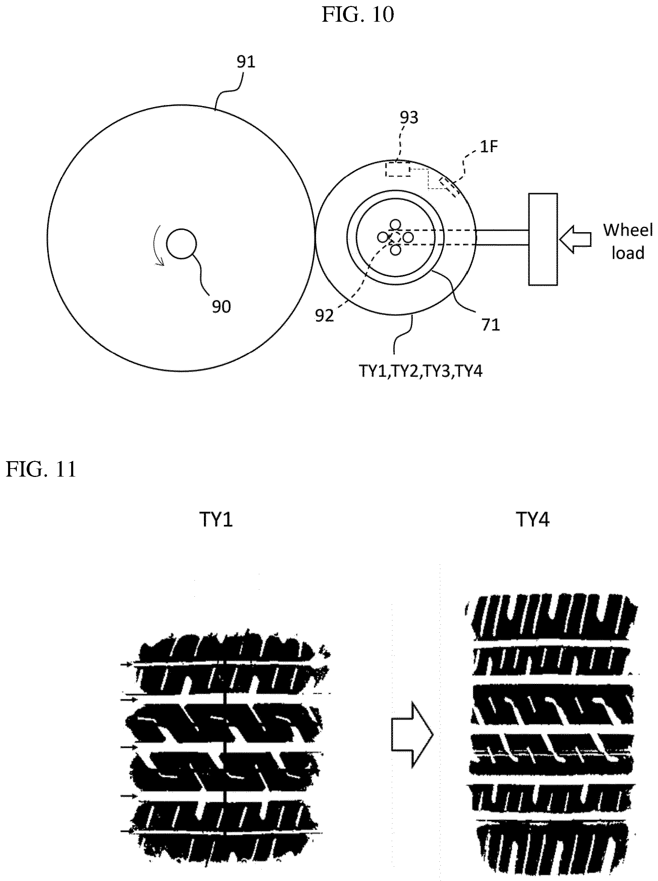

Each of the tires TY1 to TY4 was mounted on the wheel 71 and incorporated into an experimental device as illustrated in Fig. 10. The experimental device includes a drum 91 capable of rotating about a rotation shaft 90 at a predetermined rotational speed and a rotation shaft 92 capable of rotatably mounting the wheel 71. When the wheel 71 of the tires TY1 to TY4 is mounted on the rotation shaft 92 and the drum 91 is rotated in a state where the tread portion of the tires TY1 to TY4 is in contact with the outer circumferential surface of the drum 91, the tires TY1 to TY4 can be rotated. Moreover, a predetermined wheel load can be applied to the tires TY1 to TY4.

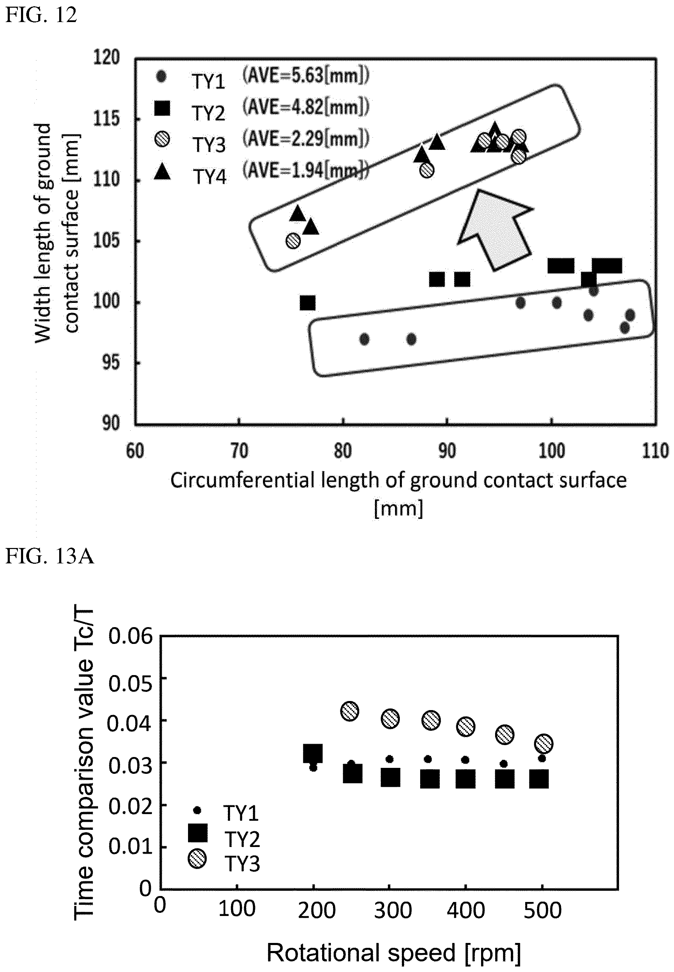

First, the inventors measured the shapes of the ground contact surfaces of the tires TY1 to TY4 without rotating the drum 91 while changing the internal pressure condition (150 kPa, 200 kPa, 250 kPa) and the wheel load condition (2 kN, 2.5 kN, 3 kN) of the tires TY1 to TY4. This measurement was performed by pressing the tread portions of the tires TY1 to TY4 to which ink was applied against the paper stretched on the outer peripheral surface of the drum 91 in a stationary state. Fig. 11 illustrates the shape of the ground contact surface of the tire TY1 and the shape of the ground contact surface of the tire TY4 measured by this method under the same conditions. From the result illustrated in Fig. 11, it has been confirmed that in the tire TY4, the circumferential length of the ground contact surface is shorter than that of the tire TY1, and the width length of the ground contact surface is longer than that of the tire TY1. Furthermore, for the tires TY1 to TY4, when the circumferential length and the width length of the ground contact surface specified from the shape of the ground contact surface measured under each condition are plotted, a graph illustrated in Fig. 12 is obtained. As illustrated in Fig. 12, it can be seen that when this type of tire wears, the circumferential length of the ground contact surface tends to be slightly shorter and the length in the width direction tends to be longer regardless of the conditions of the tire air pressure and the wheel load. Therefore, the wear state of the tire can be estimated based on the change in the circumferential length and the width length of the ground contact surface.

Subsequently, the inventors incorporated a power generator 1F described below into the tires TY1 to TY3 to form three types of tire assemblies. In the power generator 1F, a polyimide film was used as the first insulating film 110, and a nylon film was used as the second insulating film 210. Furthermore, conductive nonwoven fabrics were used as the first electrode 120 and the second electrode 220, and they were connected to a measurement module 93 so that the voltage of the power generator 1F can be measured. As the first base material 130 and the second base material 230, a sheet made of silicone rubber in which cylindrical protrusions having a height of 0.5 mm and a diameter of 1.5 mm were formed on the entire surface was used. The first member 10 and the second member 20 had a square shape of 50 mm × 50 mm. The power generator 1F was disposed such that one piece of the power generator 1F was along the circumferential direction of the tires TY1 to TY3 and the center line of the power generator 1F was along the center line of the tread portion of the tires TY1 to TY3, and the cover body 50 adhered to the inner side surfaces of the tires TY1 to TY3 so as to cover the power generator 1F. As the cover body 50, a member for tire repair mainly made of an elastomer and incorporating a reinforcing cord was used.

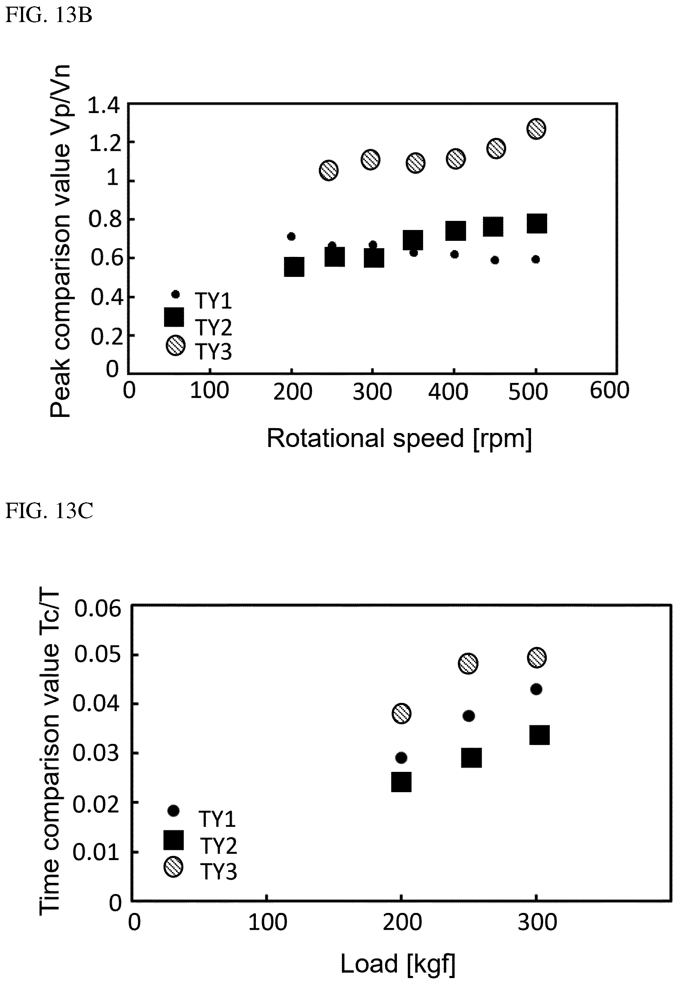

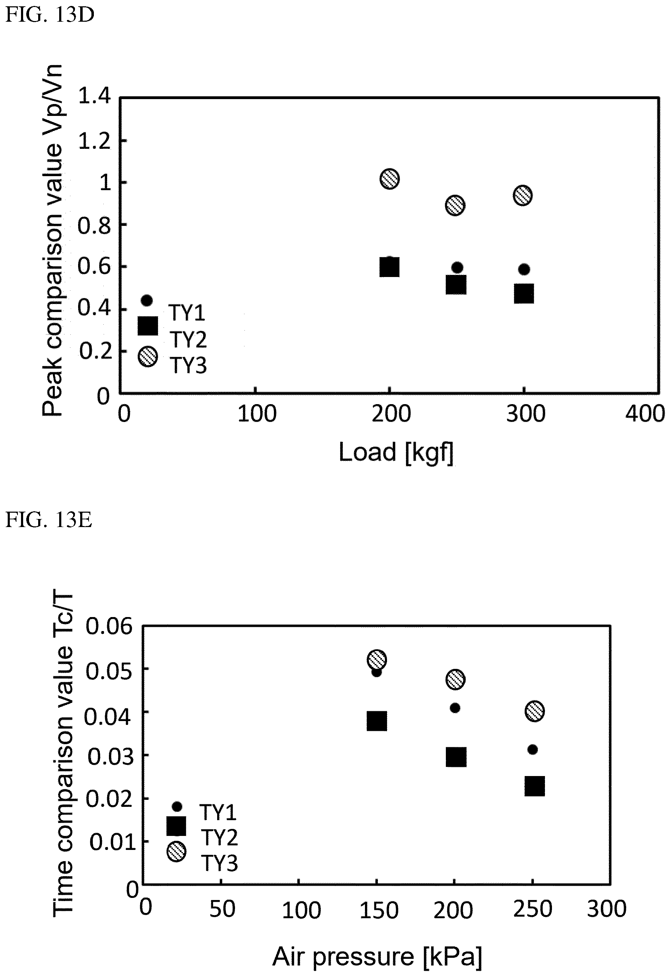

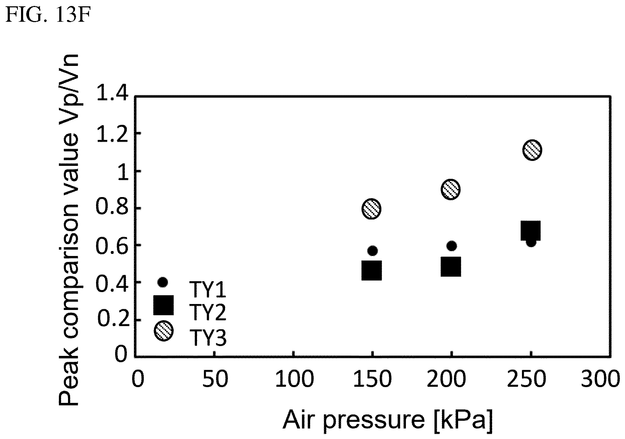

Three types of tire assemblies were rotated at the internal pressure (150 kPa, 200 kPa, 250 kPa), the wheel load (200 kgf, 250 kgf, 300 kgf), and various rotational speeds described above, and measurement data of each power generator 1F was acquired by a telemeter. The average values of the peak values Vp and Vn and the time intervals T and Tc were calculated from the acquired measurement data. On the basis of these average values, the peak comparison values Vp/Vn and the time comparison values Tc/T of the three types of tire assemblies at each internal pressure, each wheel load, and each rotational speed are calculated, and plotted graphs are illustrated in Figs. 13A to 13F. According to the graphs illustrated in Figs. 13A to 13F, the time comparison value Tc/T relatively changes depending on the conditions of the internal pressure, the wheel load, and the rotational speed. On the other hand, it can be seen that the peak comparison value Vp/Vn has a clear difference between the tire TY1 and the tire TY3 regardless of the conditions of the internal pressure, the wheel load, and the rotational speed. Therefore, a threshold of the peak comparison value Vp/Vn for estimating that the tire 70 is worn is determined by an experiment or a simulation, and the wear state of the tire 70 can be estimated by comparing this threshold with the peak comparison value Vp/Vn specified at the time of traveling of the vehicle 6.

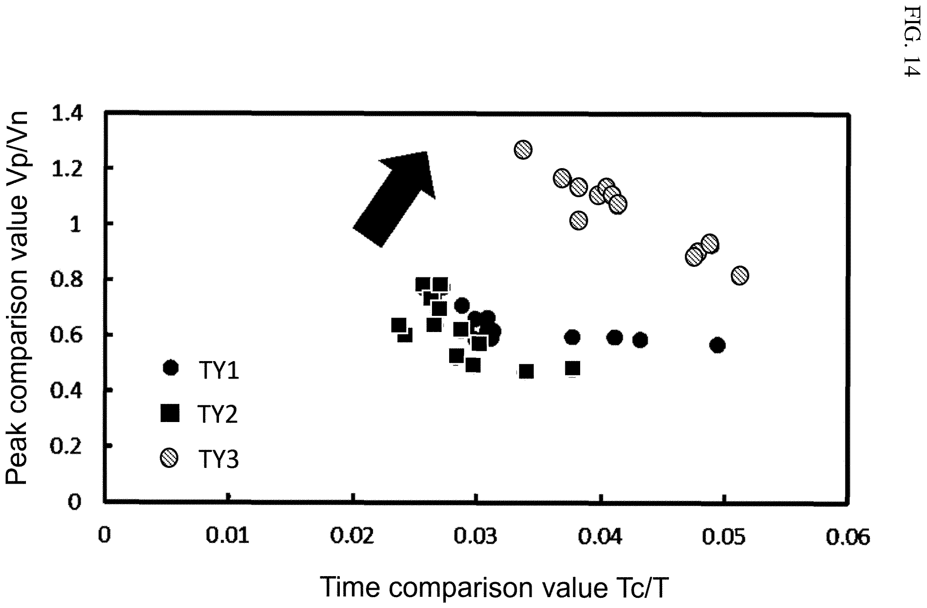

Fig. 14 is a graph obtained by plotting similar data in Figs. 13A to 13F with the horizontal axis representing time comparison value Tc/T and the vertical axis representing peak comparison value Vp/Vn. As can be seen from Fig. 14, the tire TY1 and the tire TY2 are clearly distinguished from the tire TY3 on the graph. Therefore, if a boundary curve for distinguishing a wear region estimated to be in the wear state and a non-wear region estimated not to be in the wear state is specified in advance on the plot plane with the time comparison value Tc/T as the first axis and the peak comparison value Vp/Vn as the second axis, it is possible to estimate whether or not the tire 70 is in the wear state based on the peak comparison value Vp/Vn and the time comparison value Tc/T.

The method for specifying the boundary curve described above is not particularly limited. For example, on a graph obtained by plotting a large number of points of (Tc/T, Vp/Vn) acquired by an experiment, a straight line for distinguishing the wear region and the non-wear region may be created, and an equation of the straight line may be obtained. Alternatively, when a data set of (Tc/T, Vp/Vn) is input, the wear state of the tire 70 may be estimated by creating a machine learning model that outputs an estimation result (probability that the input data set exists in the wear region) as to whether or not the tire 70 is worn. The machine learning model can be learned using, for example, data obtained by combining a large number of data sets of the time comparison value Tc/T and the peak comparison value Vp/Vn acquired by experiment with a correct answer as to whether the data exists in the wear region or the non-wear region. The machine learning model may be a decision tree, a support vector machine, a neural network, a convolutional neural network, clustering, or the like, and is not particularly limited.

### <7. Wear state estimation processing of estimation system>

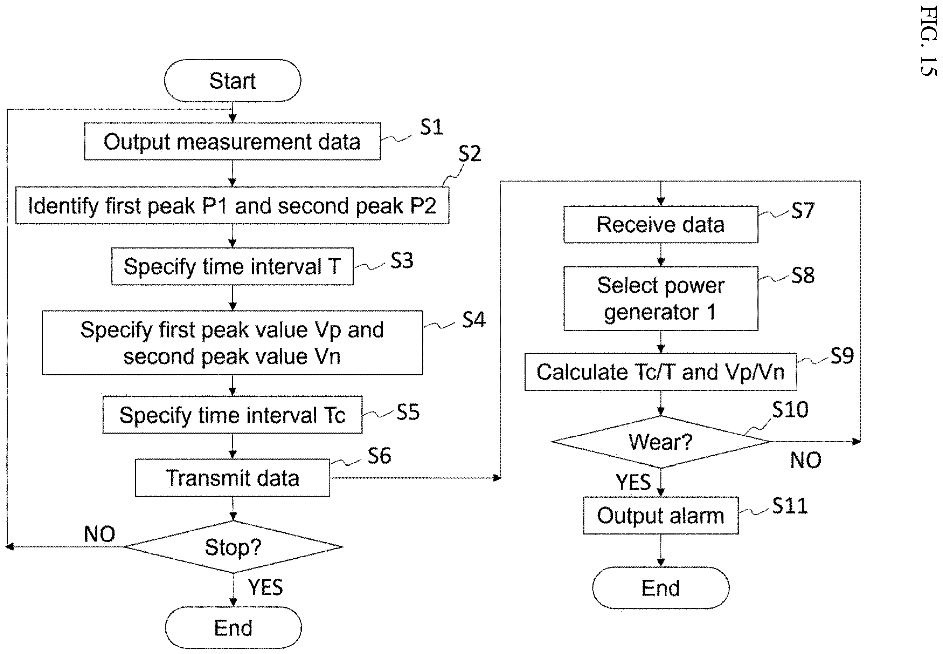

Hereinafter, an operation in a case where the estimation system 9 is configured as an estimation system of a wear state will be described. Fig. 15 is a flowchart showing an example of estimation processing executed by the estimation system 9. For example, the estimation system 9 can start the following estimation process when an ignition switch of the vehicle 6 is turned on, and stop the estimation process when a certain period of time has elapsed after the vehicle 6 stops. Note that it is assumed that the tire assemblies 7a to 7d have a common configuration, and it is known in advance that the width length of the ground contact surface increases when the tire 70 is worn. Furthermore, in each tire assembly 7, the power generators 1A to 1E (Hereinafter, collectively referred to as a power generator 1.) having a common configuration are disposed as illustrated in Fig. 8.

In step S1, the measurement device 82 of the tire assembly 7 measures the voltage generated in each power generator 1. The measurement device 82 outputs time-series measurement values in a predetermined measurement time to the internal computer 81 as measurement data. The internal computer 81 stores the output measurement data in a main memory or a storage device in association with identification information for distinguishing each power generator 1.

In step S2, the internal computer 81 identifies a large number of first peaks P1 and second peaks P2 included in the measurement data of each power generator 1. Since the identification of the first peaks P1 and the second peaks P2 can be performed by a known sampling method, the description thereof is omitted here. Note that, in a case where the internal computer 81 determines that the absolute value of the voltage of the power generator 1 is extremely small and is at a noise level, the processing of step S2 and subsequent steps is not performed on the measurement data of the power generator 1, and the processing is performed as no measurement data. Therefore, the power generators 1A and 1E are normally processed without measurement data.

In step S3, the internal computer 81 specifies the time interval T. The time interval T can be an average value of the first interval T1 which is a cycle of the first peak P1, an average value of the second interval T2 which is a cycle of the second peak P2, or an average value of the first interval T1 and the second interval T2. The internal computer 81 stores the specified time interval T in the main memory or the storage device in association with the identification information of each power generator 1.

In step S4, the internal computer 81 specifies each of the first peak value Vp and the second peak value Vn. The first peak value Vp and the second peak value Vn can be average values of a large number of first peaks P1 and second peaks P2 included in the measurement data. The internal computer 81 stores the specified first peak value Vp and second peak value Vn in the main memory or the storage device in association with the identification information of each power generator 1.

In step S5, the internal computer 81 specifies the time interval Tc from the first peak P1 to the second peak P2 forming a pair. The time interval Tc can be an average value of the time intervals Tc from a large number of first peaks P1 to second peaks P2 included in the measurement data. The internal computer 81 stores the specified time interval Tc in the main memory or the storage device in association with the identification information of each power generator 1.

In step S6, the internal computer 81 transmits the time interval T, the first peak value Vp, the second peak value Vn, and the time interval Tc specified in steps S3 to S5 to the external computer 60 in association with the identification information of each power generator 1. This transmission is performed, for example, at a predetermined cycle. Furthermore, in a case where there is a power generator 1 without measurement data, the internal computer 81 also transmits identification information of the power generator 1 to the external computer 60. Thereafter, when the vehicle 6 is not stopped, the measurement device 82 outputs measurement data in the next measurement time to the internal computer 81. The internal computer 81 performs the processing of steps S2 to S6 on the new measurement data. That is, in the tire assembly 7, the processing from steps S1 to S6 is repeated until the traveling of the vehicle 6 is stopped.

In step S7, the data acquisition section 620 of the external computer 60 receives the data transmitted from the internal computer 81 of each tire assembly 7. The data acquisition section 620 stores the received data in the RAM 602 or the storage device 604 in association with the identification information for distinguishing the tire assemblies 7a to 7d and the identification information of each power generator 1. Even for the power generator 1 without measurement data, the fact that there is no measurement data is stored in the RAM 602 or the storage device 604 in association with the identification information of the power generator 1.

In step S8, the estimation section 621 selects the power generator 1 that calculates the time comparison value Tc/T and the peak comparison value Vp/Vn. The estimation section 621 normally selects the power generators 1B to 1D of the respective tire assemblies 7, but excludes those stored as no measurement data if any.

In step S9, the estimation section 621 calculates the time comparison value Tc/T and the peak comparison value Vp/Vn for each power generator 1 selected in step S8, and creates a data set of (Tc/T, Vp/Vn). The estimation section 621 stores the created data set in the RAM 602 or the storage device 604 in association with the identification information of each power generator 1.

In step S10, the estimation section 621 estimates whether or not the tire 70 of each tire assembly 7 is in a wear state based on the measurement data of each power generator 1. First, the estimation section 621 determines whether or not the first peak value Vp and the second peak value Vn have been stored in the latest step S7 for the power generators 1A and 1E. For at least one of the power generators 1A or 1E, in a case where the first peak value Vp and the second peak value Vn are stored in the latest step S7, the estimation section 621 estimates that the tire 70 of the tire assembly 7 including the power generator 1 is in a wear state.

Next, the estimation section 621 determines whether the data set of (Tc/T, Vp/Vn) calculated in step S9 is in the wear region or the non-wear region defined on the plot plane of the time comparison value Tc/T and the peak comparison value Vp/Vn. It is assumed that the boundary curve defining the wear region and the non-wear region is specified in advance and stored in the storage device 604. In a case where it is determined that at least one set of data (Tc/T, Vp/Vn) is in the wear region, the estimation section 621 estimates that the tire 70 of the tire assembly 7 including the power generator 1 is in a wear state.

The estimation section 621 can estimate the wear state by the above estimation method. Then, in a case where it is not estimated in step S10 that the tires 70 of the respective tire assemblies 7 are worn, the estimation section 621 finally estimates that not all the tires of the vehicle 6 are in the wear state (NO). In this case, the external computer 60 further repeats the processing of steps S7 to S10 for the data transmitted from the internal computer 81 next.

On the other hand, when there is the tire assembly 7 in which the wear of the tire 70 is estimated in step S10, the estimation section 621 estimates that the tire 70 is worn (YES). In this case, in subsequent step S11, the alarm output section 622 generates an alarm and outputs the alarm to the display 65. The alarm may be, for example, a message or an image for warning the driver of the vehicle 6 that the tire 70 is worn. Moreover, the alarm output section 622 may generate at least one of character information or graphics indicating the position of the tire 70 estimated to be worn, and display the character information and the graphics on the display 65. Furthermore, alternatively or additionally, the alarm output section 622 may generate an alarm by voice and output the alarm by a speaker (not illustrated).

### <8. Ground contact state estimation processing of estimation system>

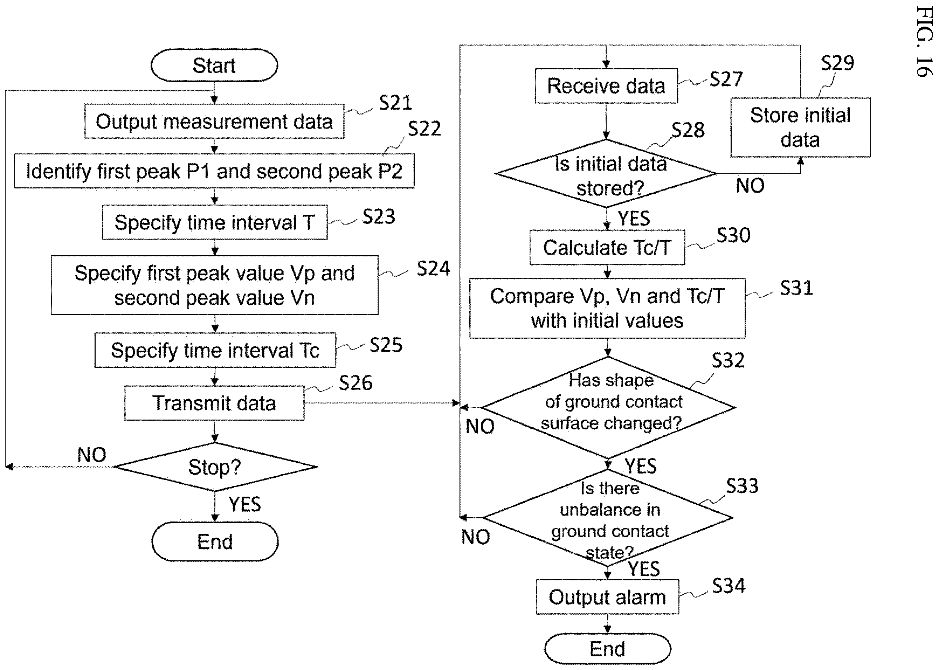

Hereinafter, an operation in a case where the estimation system 9 is configured as an estimation system of a ground contact state will be described. Fig. 16 is a flowchart showing an example of the estimation process of the ground contact state executed by the estimation system 9, but is common to the estimation process of the wear state illustrated in Fig. 15 in many points. Therefore, hereinafter, configurations different from the wear state estimation process will be described in detail, and description of common configurations will be omitted.

The processing from step S21 to step S26 is common to steps S1 to S6 in the wear state estimation processing.

In step S27, the data acquisition section 620 receives the data of the first peak value Vp, the second peak value Vn, the time interval T, and the time interval Tc of each power generator 1 included in each tire assembly 7 from the internal computer 81 together with the identification information of each power generator 1, and stores the data in the RAM 602 or the storage device 604. The data acquisition section 620 may also acquire data of at least one of the internal pressure, the rotational speed, or the wheel load of the tire 70 acquired by the vehicle 6, another sensor mounted on the tire assembly 7, or the like, and store the acquired data and the received data in the RAM 602 or the storage device 604 in association with each other.

In step S28, the data acquisition section 620 determines whether or not the first peak value Vp, the second peak value Vn, the time interval T, and the time interval Tc of the power generators 1B to 1D at the initial use of the tire 70 are stored in the storage device 604 as initial data. In a case where it is determined that the initial data is stored (YES), the processing proceeds to step S30. Note that, since the voltages of the power generators 1A and 1E at the initial use are assumed to be noise levels, no measurement data is present in the initial data.

In a case where it is not determined that the initial data is stored (NO), the data acquisition section 620 stores the data received in the latest step S27 in the storage device 604 as the initial data (step S29). This initial data may be stored in association with data of at least one of the internal pressure, the rotational speed, or the wheel load of the tire 70 acquired by a sensor or the like mounted on the vehicle 6 or the tire assembly 7. After a certain amount of data is stored as initial data, step S30 is executed after step S28 without performing step S29.

In step S30, the estimation section 621 calculates the time comparison value Tc/T for the power generators 1B to 1D. The estimation section 621 stores the calculated time comparison value Tc/T in the RAM 602 or the storage device 604 in association with the original data.

In step S31, the estimation section 621 compares the time comparison value Tc/T calculated in step S30 with the time comparison value Tc/T at the initial use of the tire 70. The estimation section 621 reads the time interval T and the time interval Tc of the initial data stored in the storage device 604, calculates a time comparison value Tc/T at the initial use, and compares the time comparison value Tc/T with the time comparison value Tc/T calculated in step S30. Alternatively, the estimation section 621 extracts at least one condition of the internal pressure, the rotational speed, and the wheel load associated with the time comparison value Tc/T in step S30, and reads initial data of the time intervals T and Tc associated with a condition equivalent thereto or a condition relatively close thereto. Then, a time comparison value Tc/T at the initial stage of use is calculated, and this is compared with the time comparison value Tc/T calculated in step S30.

Furthermore, the estimation section 621 compares the data of the first peak value Vp and the second peak value Vn acquired in step S27 with the initial data for the power generators 1A to 1E. The estimation section 621 simply reads the initial data of the first peak value Vp and the second peak value Vn stored in the storage device 604, and compares the initial data with the first peak value Vp and the second peak value Vn acquired in step S27, respectively. Alternatively, the estimation section 621 reads initial data of the first peak value Vp and the second peak value Vn associated with a condition equivalent to at least one of the conditions associated with the data to be compared or to a condition relatively close thereto, and compares them. Note that, since there is no initial data for the power generators 1A and 1E, it is determined whether the first peak value Vp and the second peak value Vn of at least one of the power generators 1A or 1E is newly acquired.

In step S32, the estimation section 621 estimates whether or not the shape of the ground contact surface has changed on the basis of the comparison result of step S31. First, in a case where it is determined in step S31 that the first peak value Vp and the second peak value Vn of at least one of the power generators 1A or 1E is newly acquired, the estimation section 621 estimates that the width length of the ground contact surface is increased, and estimates that the shape of the ground contact surface is changed (YES). Furthermore, in a case where it is determined that the first peak value Vp and the second peak value Vn of at least one of the power generators 1B to 1D has changed to the threshold or more as compared with the first peak value Vp and the second peak value Vn of the initial data, the estimation section 621 estimates that the shape of the ground contact surface has changed (YES). Moreover, in a case where it is determined that at least one time comparison value Tc/T among the power generators 1B to 1D has changed to the threshold value or more as compared with the time comparison value Tc/T of the initial data, the estimation section 621 estimates that the circumferential length of the ground contact surface has increased or decreased, and estimates that the shape of the ground contact surface has changed (YES).

In a case where it is determined that the first peak value Vp, the second peak value Vn, and the time comparison value Tc/T of each of the power generators 1B to 1D have not changed by the threshold or more as compared with the first peak value Vp, the second peak value Vn, and the time comparison value Tc/T of the initial data in a state where none of the power generators 1A and 1E has measurement data, the estimation section 621 estimates that there is no change in the shape of the ground contact surface (NO). In this case, the processing returns to step S27, and steps S28 to S32 are repeated for newly received data.

Note that the peak values Vp and Vn and the time comparison value Tc/T may be compared with the peak values Vp and Vn and the time comparison value Tc/T of the initial data by calculating a difference between the peak values Vp and Vn and the time comparison value Tc/T or by calculating a ratio between the peak values Vp and Vn and the time comparison value Tc/T. Then, the estimation of the ground contact state may be performed on the basis of whether or not the calculated difference or ratio exceeds a predetermined threshold value.

In a case where it is estimated in step S32 that the shape of the ground contact surface has changed, the estimation section 621 may further estimate the unbalance of the ground contact state in step S33. For example, in a case where the peak values Vp and Vn of only one of the power generator 1A and the power generator 1E are newly acquired in the same tire assembly 7, the estimation section 621 can estimate that the tire 70 of the tire assembly 7 is biased to one side in the width direction and grounded (YES). Furthermore, for example, in a case where it is determined that the peak values Vp and Vn of the power generator 1C are remarkably decreased from the initial data and are smaller than the peak values Vp and Vn of other power generators by a threshold value or more, the estimation section 621 can estimate that the tire 70 is biased outward in the width direction and grounded (YES). Moreover, for example, in a case where it is determined that the peak values Vp and Vn of the power generator 1C significantly increase from the initial data, and in addition to or instead of this, the peak values Vp and Vn of the power generator 1B and the power generator 1D significantly decrease from the initial data, the estimation section 621 can estimate that the tire 70 is grounded biased to the center in the width direction (YES). If not, the estimation section 621 can estimate that the unbalance of the ground contact state does not occur or falls within the allowable range (NO).

In a case where it is estimated in step S33 that the unbalance of the ground contact state does not occur or is within the allowable range, the process returns to step S27, and steps S28 to S32 are repeated for newly received data.

In a case where the unbalance of the ground contact state is estimated in step S33, the alarm output section 622 generates an alarm in step S34 and outputs the alarm to the display 65. The alarm may be, for example, a message or an image for warning the driver of the vehicle 6 that the ground contact state of the tire 70 is biased and the tire 70 is suspected of having reduced pressure, high pressure, defective attachment, or uneven wear. The rest is similar to the alarm generated in the process of estimating the wear state.

### <9. Modification>

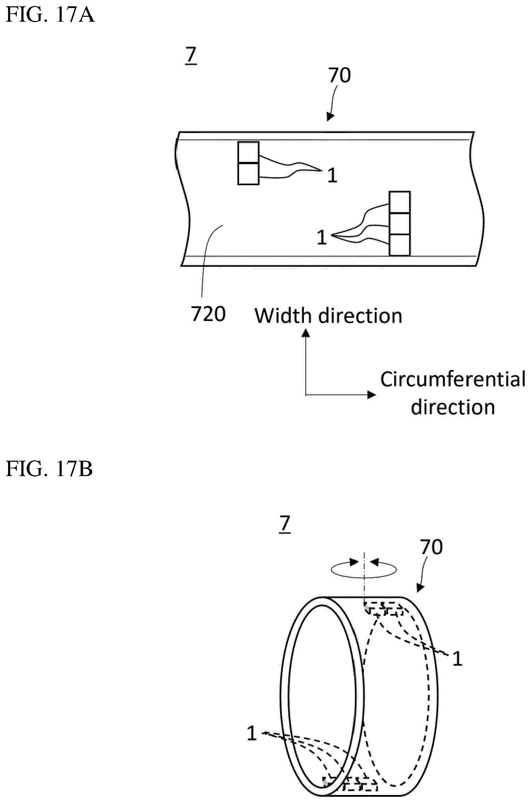

Although some embodiments of the present disclosure have been described above, the present invention is not limited to the above embodiments, and various modifications can be made without departing from the gist thereof. For example, the following modifications are possible. Furthermore, the gist of the following modifications can be appropriately combined.
(1) In the above embodiment, the estimation processing of the wear state or the ground contact state is performed based on the measurement data of the voltage output from the power generator 1, but the estimation processing may be performed based on the measurement data of another physical quantity corresponding to the voltage such as the current or the power supplied by the power generator 1.
(2) In the above embodiment, both the first surface 100 and the second surface 200 have an irregularity shape. However, the power generator 1 may be configured such that only either one of the first surface 100 and the second surface 200 has an irregularity shape.
(3) In addition to the module 8, the tire assembly 7 may include an air pressure sensor, a temperature sensor, a rotational speed sensor, and the like. Furthermore, the tire assembly 7 may include a power generator 1 for supplying electric power to these sensors. The number of power generators 1 included in the tire assembly 7 may be one or more. The estimation system 9 may include at least one power generator 1 as a whole.
(4) The external computer 60 may be another portable computer instead of the in-vehicle device. That is, the external computer 60 may be a smartphone, a laptop computer, a pad, or the like. Furthermore, in the estimation methods of Figs. 15 and 16, the external computer 60 performs calculation for estimation and estimation of the wear state and the ground contact state, but the internal computer 81 may perform these processes. That is, the internal computer 81 may include the estimation section 621 instead of the external computer 60. On the contrary, the internal computer 81 may transmit the measurement data to the external computer 60 without identify a peak or the like, and the external computer 60 may identify at least one of a peak appearing in the measurement data and a value and an interval of the peak. That is, each of the identification of the peak appearing in the measurement data, the specification of at least one of the peak value or the interval, the estimation of the wear state, and the estimation of the ground contact state may be performed by the estimation unit, and the elements constituting the estimation unit are not particularly limited.
(5) In the estimation processing of the ground contact state, the change in the ground contact surface shape and the unbalance of the ground contact state in each tire 70 were estimated. However, in addition to or instead of this, the ground contact state of the entire vehicle 6 may be estimated in consideration of the position of the wheel of the tire assembly 7 and the like. For example, in a case where the change in the ground contact surface shape is estimated only for one of the right tire assemblies 7b and 7d or the left tire assemblies 7a and 7c, uneven loading in which the load of the vehicle 6 is biased to either the left or the right is estimated.
(6) The time comparison value may be defined by T/Tc. Furthermore, it may be defined by (T - Tc). Similarly, the peak comparison value may be defined as Vn/Vp. Furthermore, it may also be defined by (Vp/Vn)², (Vn/Vp)², (Vp - Vn) or (Vn - Vp).
(7) The first peak P1 and the second peak P2 may be reversed. That is, the first peak P1 may be a negative voltage peak and the second peak may be a positive voltage peak. Furthermore, as a value of a peak appearing in measurement data of a voltage generated in the power generator 1 or the piezoelectric element PE to be described later and a physical quantity corresponding to the voltage, both a value including a sign and an absolute value can be adopted. Therefore, the first peak value and the second peak value may be values including a sign, and the peak comparison value may be an index for comparing the first peak value and the second peak value including the sign. Furthermore, the value of the first peak and the value of the second peak specified based on the measurement data of the power generator 1 and the piezoelectric element PE disposed at the position of the edge in the width direction of the ground contact surface when the tire 70 is new or at the position outside the position may also be values including signs. That is, the width length of the ground contact surface of the tire 70 may be estimated based on a change in a peak value including a sign.
(8) The wear state estimation processing and the ground contact state estimation processing may be executed in a case where it is determined that the vehicle 6 travels straight from the viewpoint of improving estimation accuracy. Furthermore, in the wear state estimation process, in a case where it is known in advance that the length of the ground contact surface in the width direction decreases when the tire 70 is worn, it may be determined that the tire 70 is worn in a case where the first peak value Vp and the second peak value Vn of at least one of the power generators 1B or 1D fall below a predetermined threshold, or in a case where no measurement data is determined. In a case where the wear state and the shape change of the ground contact surface are estimated in steps S10 and S32, the peak value acquired for the power generators 1A and 1E may be either the first peak value Vp or the second peak value Vn.
(9) From the viewpoint of estimating the wear state or the ground contact state of the tire 70 in more detail, it is preferable to dispose two or more power generators 1 on the inner side surface of the tire 70 as illustrated in Fig. 8. Here, although all of the two or more power generators 1 can be one-dimensionally disposed at the same position in the circumferential direction of the tire, the mass balance of the tire assembly 7 may be lost and the rotation axis of the tire assembly 7 may fluctuate due to the concentration of the mass of the power generator 1 at one position in the circumferential direction of the tire 70. The unsteadiness of the rotation shaft may adversely affect the ride comfort of the vehicle 6. From the viewpoint of preventing this, it is preferable to dispersedly dispose two or more power generators 1 at different positions in the circumferential direction, it is more preferable to dispersedly dispose two or more power generators 1 at substantially equal intervals in the circumferential direction, and it is still more preferable to dispose two or more power generators 1 so that the mass balance is uniform in the circumferential direction in consideration of the mass balance of the tire 70 itself. Furthermore, as illustrated in Fig. 17A, even in a case where two or more power generators 1 are dispersedly disposed in the circumferential direction, if the mass of the power generator 1 is unevenly distributed on one side in the width direction, the mass balance of the tire assembly 7 may be lost. As a result, a force for rotating the tire assembly 7 with respect to an axis passing through the center of the tire 70 in the width direction is generated, which may adversely affect the ride comfort of the vehicle 6 (see Fig. 17B). From the viewpoint of preventing this, in order to reduce the unbalance of the mass in the width direction, it is preferable to disperse two or more power generators 1 at symmetrical positions with respect to the center line of the tread portion 700.

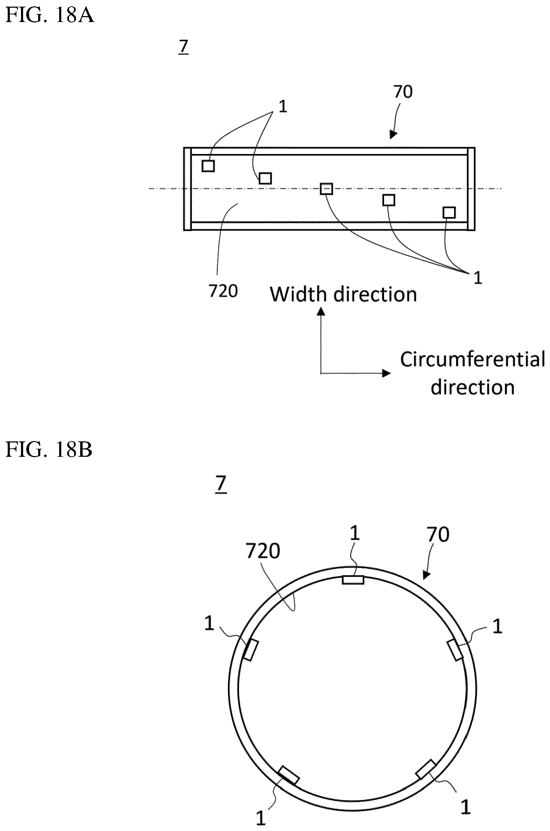

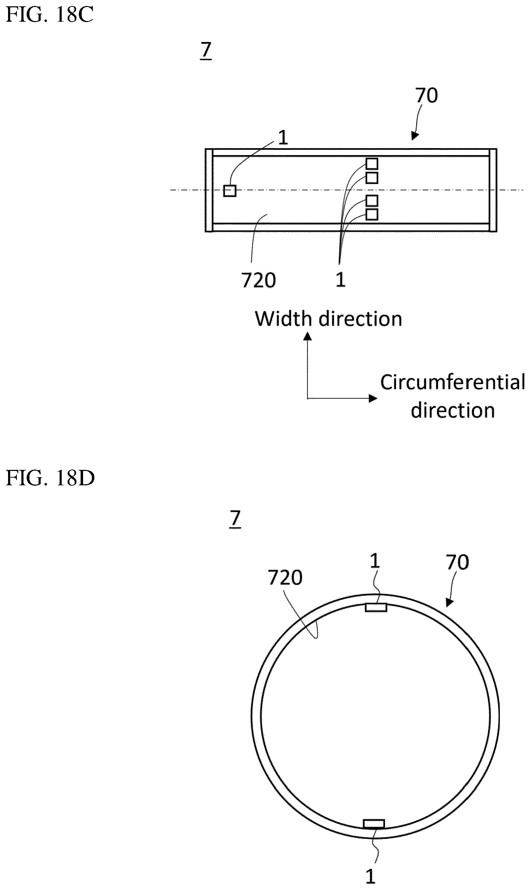

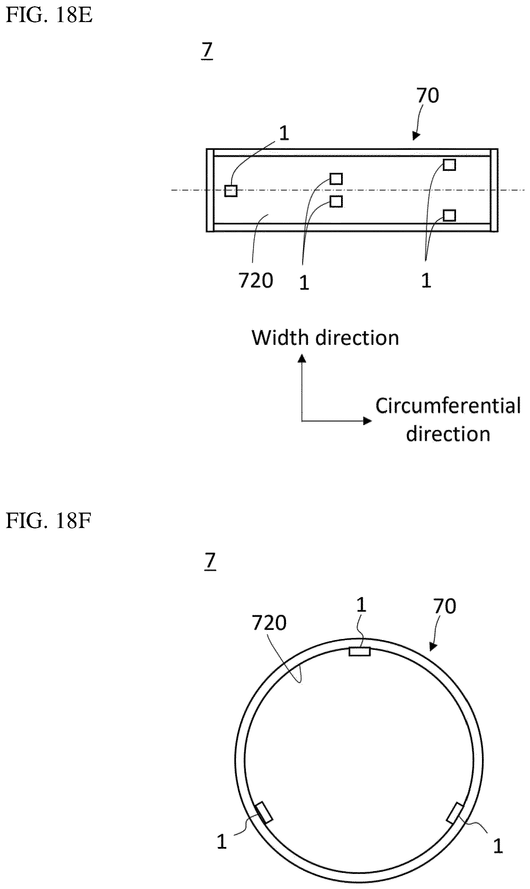

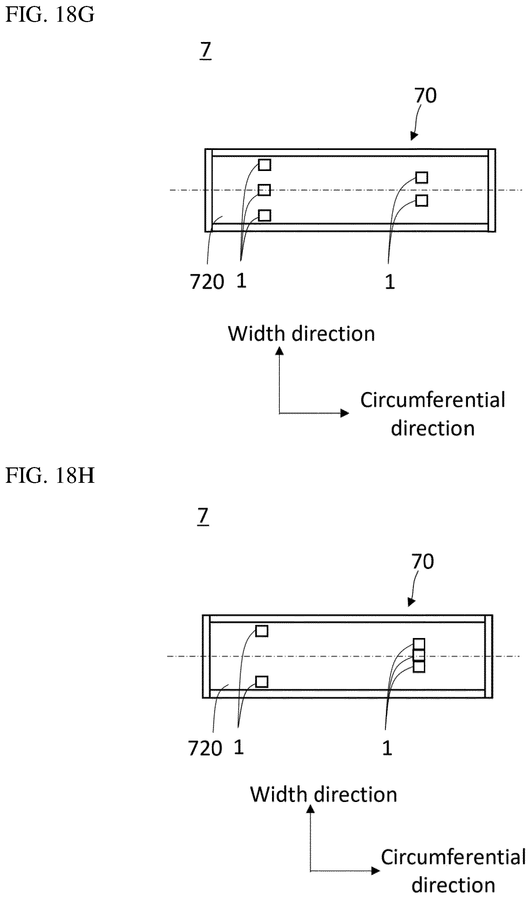

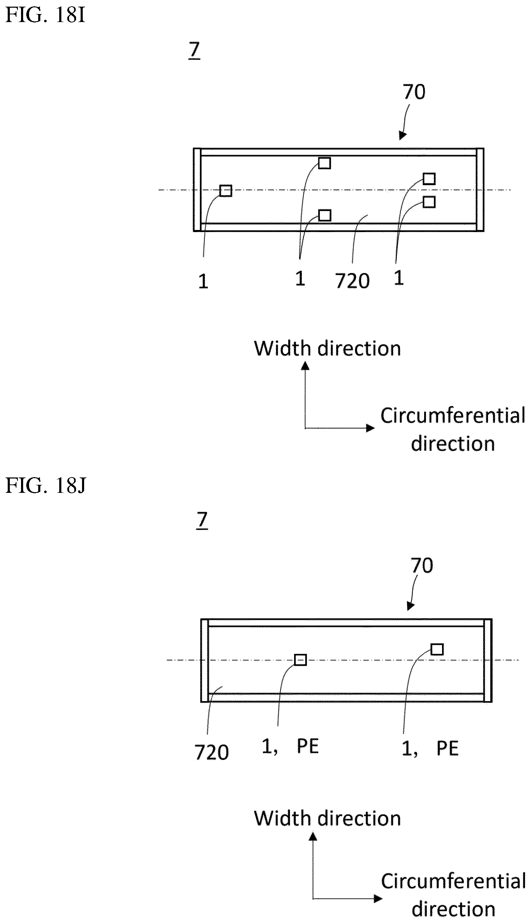

From the above, it is preferable that the two or more power generators 1 are two-dimensionally disposed along the circumferential direction and the width direction of the tire 70, and it is more preferable that the power generators 1 are disposed so as to be dispersed at substantially equal intervals in the circumferential direction of the tire 70 and to be dispersed at symmetrical positions with respect to the center line of the tread portion 700. As an example of such an arrangement, as illustrated in Figs. 18A and 18B, there is an arrangement in which the other power generator 1 is located at a position more distant from the reference power generator 1 in the circumferential direction toward the other end side in the width direction with respect to the power generator 1 located on one end side in the width direction of the tire 70 (However, "away in the circumferential direction" refers to a positional relationship on a development view of the tire 70 illustrated in Fig. 18A.). Furthermore, as illustrated in Figs. 18C and 18D, a T-shaped arrangement in which only the power generator 1 located at the center in the width direction is disposed at different positions in the circumferential direction, as illustrated in Figs. 18E and 18F, a V-shaped arrangement in which a set of power generators 1 located at positions symmetrical with respect to the center line of the tread portion 700 is disposed at the same position in the circumferential direction, as illustrated in Fig. 18G, a U-shaped arrangement as illustrated in Fig. 18H, an O-shaped arrangement as illustrated in Fig. 18I, and the like are exemplified. In any of the arrangements of Figs. 18C to 18I, the set of power generators 1 disposed at symmetrical positions with respect to the center line of the tread portion 700 may be disposed at different positions instead of the same position in the circumferential direction. Note that the positions of peaks of the outputs from the power generators 1 disposed at different positions in the circumferential direction are shifted from each other on the time axis of the measurement data. Therefore, in a case where the power generator 1 is used as a power source, power supply can be performed by temporally smoothing.

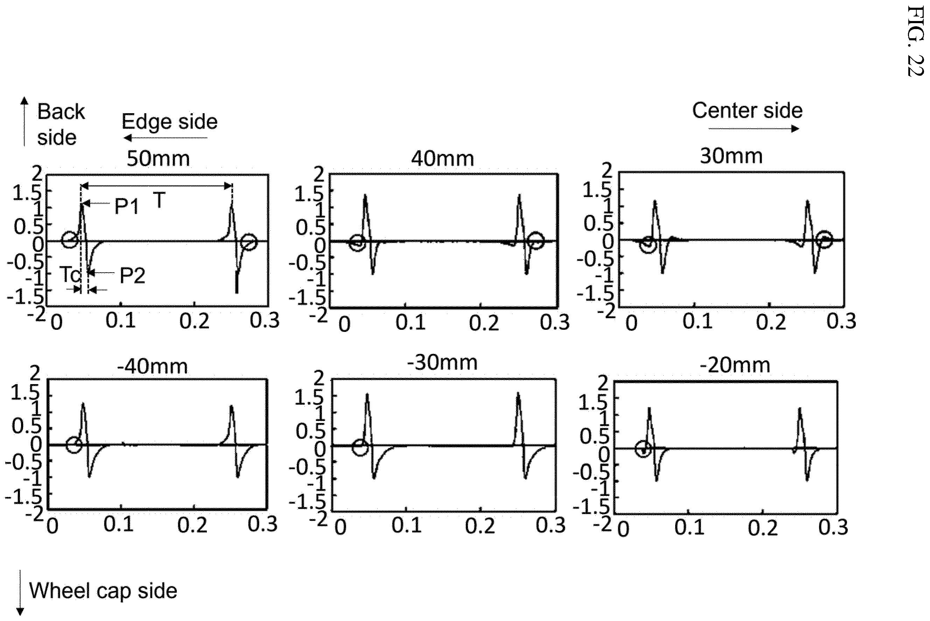

(10) The power generator 1 constituting the estimation system 9 may be replaced with a piezoelectric element PE that generates a voltage when pressure is applied. That is, the estimation system 9 may be configured as an estimation system including the piezoelectric element PE disposed on the inner side surface 720 of the tire 70, the measurement device 82 that measures at least one of a voltage generated in the piezoelectric element PE or a physical quantity corresponding to the voltage and outputs time-series measurement data, and an estimation unit (at least one of the internal computer 81 or the external computer 60) that estimates at least one of a wear state or a ground contact state of the tire on the basis of the measurement data. Similarly to the power generator 1, the piezoelectric element PE also outputs a voltage of a waveform in which the first peak P1, the second peak P2, the time intervals T and Tc are observed as illustrated in Fig. 22 with the rotation of the tire 70. Therefore, the estimation of at least one of the wear state or the ground contact state of the tire based on the time comparison value Tc/T, the peak values Vp and Vn, the peak comparison value Vp/Vn, and the like, which has already been described for the power generator 1, can be similarly applied to the piezoelectric element PE. Furthermore, the processing of steps S1 to 11 and steps S21 to S34 of the above embodiment can be similarly applied to the piezoelectric element PE. Note that similarly to the power generator 1, the piezoelectric element PE is preferably disposed on at least one of a position corresponding to edges on both sides in the width direction of the ground contact surface when the tire 70 is in a new state and a position corresponding to an outer side in the width direction than the width of the ground contact surface when the tire 70 is in a new state on the inner side surface 720.

Moreover, in the piezoelectric element PE, similarly to the power generator 1, it is preferable that two or more piezoelectric elements PE are two-dimensionally disposed along the circumferential direction and the width direction of the tire 70, and it is more preferable that these piezoelectric elements PE are disposed so as to be dispersed at substantially equal intervals in the circumferential direction of the tire 70 and to be dispersed at symmetrical positions with respect to the center line of the tread portion 700. Therefore, the example of the two-dimensional arrangement of the power generator 1 illustrated in Figs. 18A to 18I is also applied to the piezoelectric element PE. Even in this case, it is more preferable that at least one of the piezoelectric elements PE is disposed on at least one of a position corresponding to edges on both sides in the width direction of the ground contact surface when the tire 70 is in a new state and a position corresponding to an outer side in the width direction than the width of the ground contact surface when the tire 70 is in a new state on the inner side surface 720.

(11) In a case where the power generator 1 or the piezoelectric elements PE are two-dimensionally disposed, the number of these elements is not particularly limited as long as it is two or more. For example, as illustrated in Fig. 18J, in a case where at least two power generators 1 or piezoelectric elements PE disposed at positions different from each other in the circumferential direction and the width direction exist in the tire assembly 7, it can be said that the "Two or more elements are disposed two-dimensionally along the circumferential direction and the width direction of the tire 70." state is established.

### <10. Features>

According to the estimation system 9, since the impact transmitted to the tire 70 is converted into a voltage by the power generator 1, the S/N ratio of the measurement data is less likely to deteriorate even when the vehicle 6 is traveling at a low speed, and the estimation accuracy of the wear state and the ground contact state is maintained. Furthermore, since the measurement data is generated by power generation of the power generator 1, a power source for operating the power generator 1 is unnecessary, and power consumption in the tire assembly 7 is cut. In a case where the tire assembly 7 includes the power generator 1 for supplying electric power in addition to the power generator 1 for acquiring measurement data, electric power necessary for performing the estimation processing can be supplied inside the tire assembly 7, and the cost for separately configuring the power source can be reduced. Moreover, in a case where the wear state of the tire 70 is estimated from sensing data of a strain sensor or the like, it is conceivable that a cornering force acting on the tire 70 at the time of cornering of the vehicle 6 affects the sensing data, and estimation accuracy decreases. However, in power generator 1, since it is considered that the impact from the road surface is extremely larger than the influence of the cornering force, there is a low possibility that the estimation accuracy is lowered due to the influence of the cornering.

According to the estimation system 9, it is also possible to estimate the driving tendency of the driver, the characteristics of the vehicle 6 itself, the environment in which the vehicle 6 is easily used, and the like, to evaluate the performance of the tire 70, and to propose the tire 70 according to the estimation. For example, a situation such as turning, acceleration, deceleration, and high-speed traveling of the vehicle 6 is determined by another sensor mounted on the vehicle 6, and the ground contact state estimated by the estimation system 9 under each situation is analyzed. When the vehicle 6 turns, in a case where the difference in the circumferential length between both ends in the width direction of the ground contact surface shape is large, the difference in the ground contact area of the tire 70 on the outer side of the turning and the ground contact area of the tire 70 on the inner side of the turning is large, or the time series change in the ground contact surface shape of each tire 70 is fast, it can be said that the driver has a relatively aggressive driving tendency, or the vehicle 6 easily travels slowly and rapidly. On the other hand, if it is the opposite, it can be said that the driver has a relatively mild driving tendency, or the vehicle 6 easily travels with little slowness and speed. In a case where it is considered that the driver has an aggressive driving tendency, or the vehicle 6 travels slowly and rapidly, a tire or the like having high grip performance can be proposed. On the other hand, in a case where the driver has a mild driving tendency or the vehicle 6 is considered to travel with little slowness and speed, a low fuel consumption tire, a high durability tire, a tire having high quietness, or the like can be proposed.

Furthermore, for example, the grip performance of the tire 70 can be evaluated by estimating the ground contact state together with the information of the road surface on which the vehicle 6 travels, such as a dry road surface and a wet road surface. For example, in a case where the change in the ground contact surface shape between the dry road surface and the wet road surface is small, it can be said that the tire 70 maintains good grip performance even on the wet road surface. On the other hand, in a case where the change in the ground contact surface shape between the dry road surface and the wet road surface is large or in a case where the change is large at the time of turning, it can be said that the grip performance of the tire 70 is likely to deteriorate at the time of traveling on the wet road surface. Moreover, for example, the lane change is determined based on the time-series data of at least one of the yaw rate sensor, the steering angle sensor of the steering wheel, the lateral acceleration sensor, and the gyro sensor mounted on the vehicle 6, and the wobble suppression performance of the tire 70 can be evaluated based on the change in the ground contact state of the tire 70 at the time of the lane change. Specifically, when the vehicle 6 starts straight traveling after a lane change, it can be evaluated that the wobble suppression performance is high if the ground contact state of the tire 70 quickly returns to the ground contact state when the vehicle 6 goes straight, and the wobble suppression performance is low if it is slow to return to the ground contact state when the vehicle 6 goes straight. According to the estimation system 9, it is possible to propose a tire having appropriate performance for the driver based on the performance evaluation of the tire 70 as described above.

The estimation of the driving tendency of the driver, the characteristics of the vehicle 6 itself, the environment in which the vehicle 6 is easily used, and the like, the performance evaluation of the tire 70, and the proposal of the tire 70 according to the estimation can also be performed on the basis of time-series data of various sensors used for control of the vehicle 6, such as a wheel speed sensor, an acceleration sensor, a yaw rate sensor, a steering angle sensor of a steering wheel, a lateral acceleration sensor, and a gyro sensor mounted on the vehicle 6. However, by adding the estimation result of the ground contact state by the estimation system 9 to this, it is possible to perform composite and highly valid estimation, evaluation, and proposal.

### EXAMPLES

Hereinafter, experiments performed by the inventors and results thereof will be described. However, the present invention is not limited thereto.

### <Experiment 1>

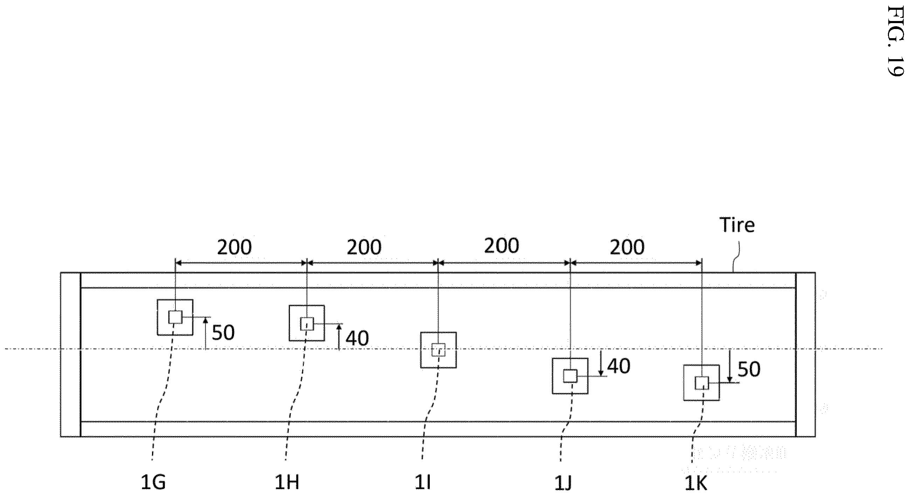

A new tire (size: 145/80R12) was prepared, and five power generators 1G to 1K having the same configuration as the power generator 1F described above were disposed on the inner side surface of the tire to manufacture an experimental tire assembly. However, the size of each power generator was 15 mm × 15 mm. As illustrated in Fig. 19, the power generators were disposed at intervals of 200 mm in the circumferential direction of the tire. Furthermore, the power generators 1I are disposed such that the center line coincides with the center line of the tread portion in the width direction, and the power generators 1H and 1J and the power generators 1G and 1K are disposed so as to be symmetric with respect to the center line of the tread portion in the width direction. The distance from the center line of the tread portion was 40 mm for the power generators 1H and 1J and 50 mm for the power generators 1G and 1K, and the power generators 1G and 1K were disposed at the positions of the edges in the width direction of the ground contact surface of the tire. As the cover body that covers the power generators 1G to 1K and is fixed to the inner side surface, a member for tire repair similar to the experiment described above was cut in accordance with the size of each power generator. Each electrode of the power generators 1G to 1K was connected to the measurement module.

The produced tire assembly was mounted on a wheel, and incorporated into the experimental device illustrated in Fig. 10 while changing the internal pressure and the wheel load of the tire, and the shape of the ground contact surface when the tire assembly was stationary was measured. The measurement method was performed by transferring the ink of the tread portion to paper as in the experiment described above. There were four combinations of internal pressure and wheel load: (250 kPa, 3 kN), (250 kPa, 2.5 kN), (200 kPa, 2 kN), and (150 kPa, 2 kN).

Next, in each combination of the internal pressure and the wheel load, the tire assembly was rotated at a speed corresponding to 30 km/h (rotational speed conversion value), and measurement data of the power generators 1G to 1K was acquired by a telemeter. An average time interval T and an average time interval Tc were specified from each acquired measurement data, and a time comparison value Tc/T was further calculated. The circumferential length of the ground contact surface of the tire was estimated for the power generators 1G to 1K based on the calculated time comparison value Tc/T and the perimeter calculated from the diameter of the tire.

### <Experimental result 1>

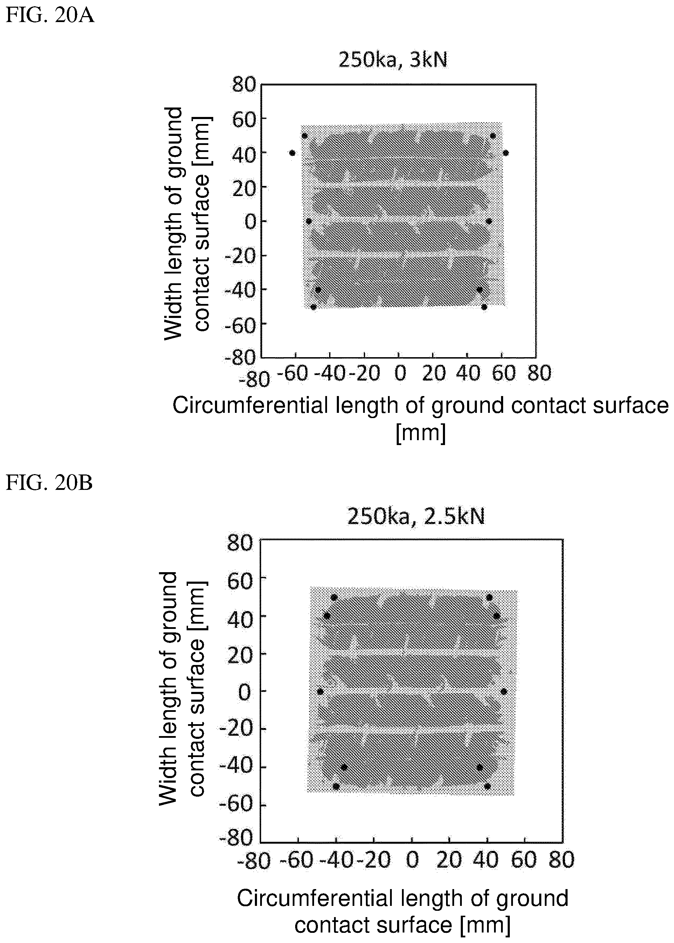

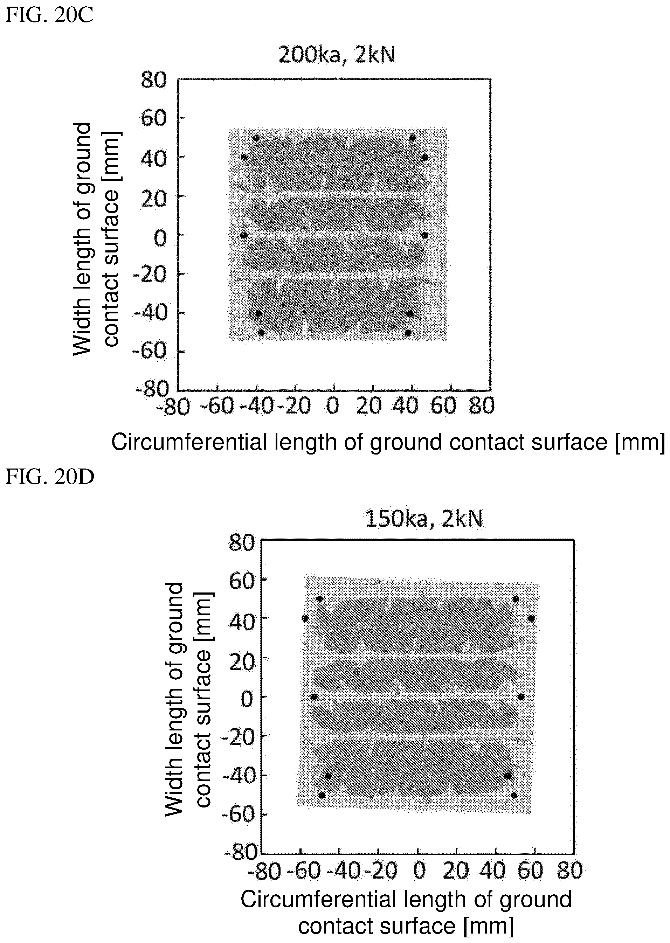

Figs. 20A to 20D illustrate graphs in which, for each combination of the internal pressure and the wheel load, the shape of the ground contact surface measured when the tire assembly is stationary and the circumferential length of the ground contact surface estimated based on the measurement data of the power generators 1G to 1K are superimposed on a plane in which the circumferential length of the ground contact surface is on the horizontal axis and the length in the width direction is on the vertical axis. A plot point representing the estimated circumferential length is illustrated on a plane such that the middle is 0 on the horizontal axis, and is illustrated at a position in the width direction of the power generators 1G to 1K. As can be seen from Figs. 20A to 20D, the estimated circumferential length and the measured circumferential length of the shape of the ground contact surface substantially match under any of the four conditions. From this result, it was confirmed that the shape of the dynamic ground contact surface of the rotating tire can be estimated based on the position and output of the power generator.

### <Experiment 2>

A tire assembly was produced in which a power generator 1F for supplying electric power and a module 8 similar to that of the above embodiment were further incorporated in the tire assembly produced in Experiment 1. The tire assembly was mounted on a wheel, and was incorporated in the experimental device illustrated in Fig. 10 and rotated, and it was confirmed whether or not the module 8 correctly operated without other batteries.

### <Experimental result 2>

It was confirmed that the module 8 operated correctly, and the data of the first peak value Vp, the second peak value Vn, the time interval T, and the time interval Tc of the power generators 1G to 1K were wirelessly transmitted in a predetermined cycle. From this result, it has been confirmed that the tire assembly including the power generator for power supply operates without separately preparing a power source, which is advantageous for simplification of the configuration of the estimation system and cost reduction.

### <Experiment 3>

13 piezoelectric elements (LDT0 Solid State Switch/Vibration Sensor, Measurement Specialties Incorporated) including a piezo film were disposed on an inner side surface of a tire of the same type as the new tire used in Experiment 1 to produce an experimental tire assembly. The piezoelectric element was covered with a repair material for an inner liner of the tire and attached to the inner side surface of the tire. The piezoelectric element included a polyvinylidene fluoride (PVDF) film having a thickness of 28 µm, a polyester substrate having a thickness of 0.125 mm, and a connector, and had an outer shape of about 25 mm × 13 mm and an internal impedance of 40 MΩ to 60 MΩ.

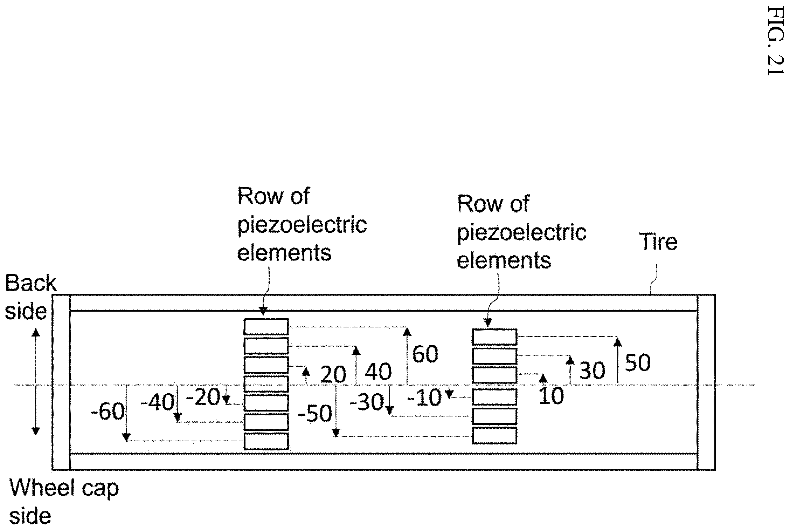

As illustrated in Fig. 21, the piezoelectric elements were disposed at intervals of 10 mm at positions of -60 mm to 60 mm in the width direction of the tire with the center line of the tread as 0 mm. As a result, two rows of piezoelectric elements were formed at intervals of about 50 mm in the circumferential direction of the tire. Here, the position of -40 mm corresponds to the edge in the width direction on the wheel cap side of the ground contact surface of the tire, and the position of 50 mm corresponds to the edge in the width direction on the side (back side) opposite to the wheel cap of the ground contact surface of the tire. That is, the positions of -60 mm, -50 mm, and 60 mm were positions that were not grounded by a new tire. The direction of the piezoelectric element was set such that the longitudinal direction thereof coincided with the circumferential direction of the tire. Each electrode of the piezoelectric element was connected to the same measurement module as in Experiment 1.

A wheel was attached to the tire assembly, and the tire assembly was incorporated into an experimental device illustrated in Fig. 10 and rotated at a constant speed to acquire time-series data of a voltage generated in each piezoelectric element. Fig. 22 is a diagram summarizing a graph of a voltage generated in a piezoelectric element at a position on a tire. In the graph of Fig. 22, the upper stage corresponds to the opposite (back) side of the wheel cap, and the lower stage corresponds to the wheel cap side. The graph is arranged such that the closer to the left side of the page, the closer to the edge side in the width direction of the tire, and the closer to the right side, the closer to the center side in the width direction of the tire. Furthermore, the horizontal axis of each graph represents time (seconds), and the vertical axis represents relative voltage (V). As illustrated in Fig. 22, when compared in the position in the width direction, it has been confirmed that a relatively small peak accompanying immediately before the maximum peak tends to appear as approaching the center of the tire, and a relatively small peak accompanying immediately before the maximum peak hardly appears as approaching the edge in the width direction of the ground contact surface of the tire.

Next, as in Experiment 1, the tire assembly was incorporated into the experimental device illustrated in Fig. 10 while changing the internal pressure and the wheel load of the tire, and the shape of the ground contact surface when the tire assembly was stationary was measured. The measurement method was performed by transferring the ink of the tread portion to paper as in Experiment 1 described above. There were five combinations of the internal pressure and the wheel load: (250 kPa, 2 kN), (250 kPa, 2.5 kN), (250 kPa, 3 kN), (200 kPa, 2 kN), and (150 kPa, 2 kN). Subsequently, in each combination of the internal pressure and the wheel load, the tire assembly was rotated at a speed corresponding to 30 km/h (rotational speed conversion value), and measurement data of voltages generated in the 13 piezoelectric elements was acquired by a telemeter. An average time interval T and an average time interval Tc were specified from the acquired measurement data in the same manner as in Experiment 1, and a time comparison value Tc/T was further calculated. The circumferential length of the ground contact surface of the tire was estimated for each piezoelectric element based on the calculated time comparison value Tc/T and the perimeter calculated from the diameter of the tire.

### <Experimental result 3>

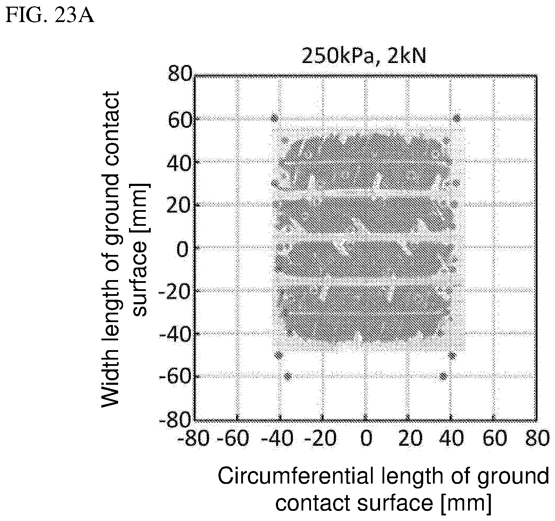

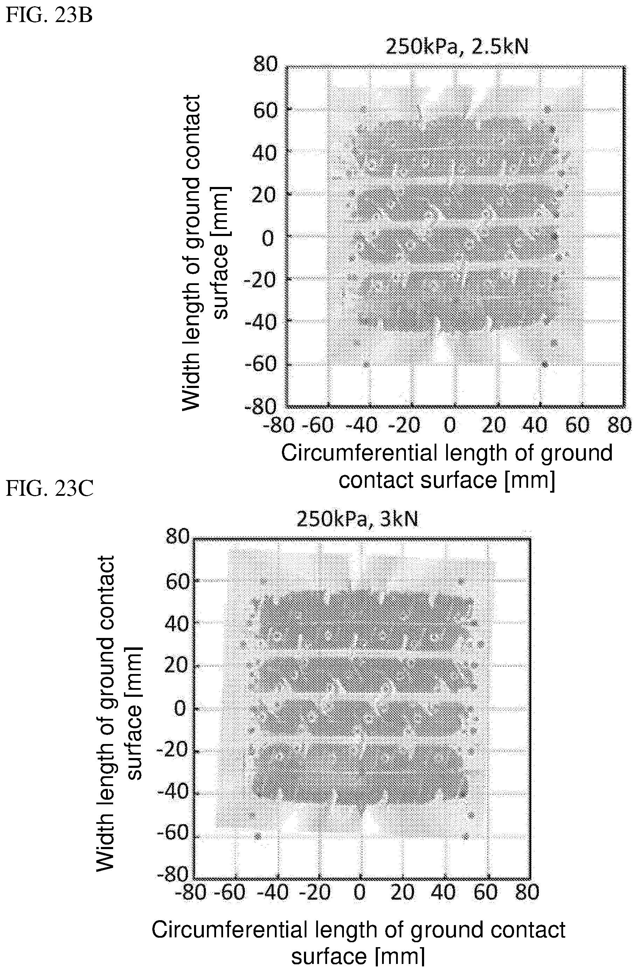

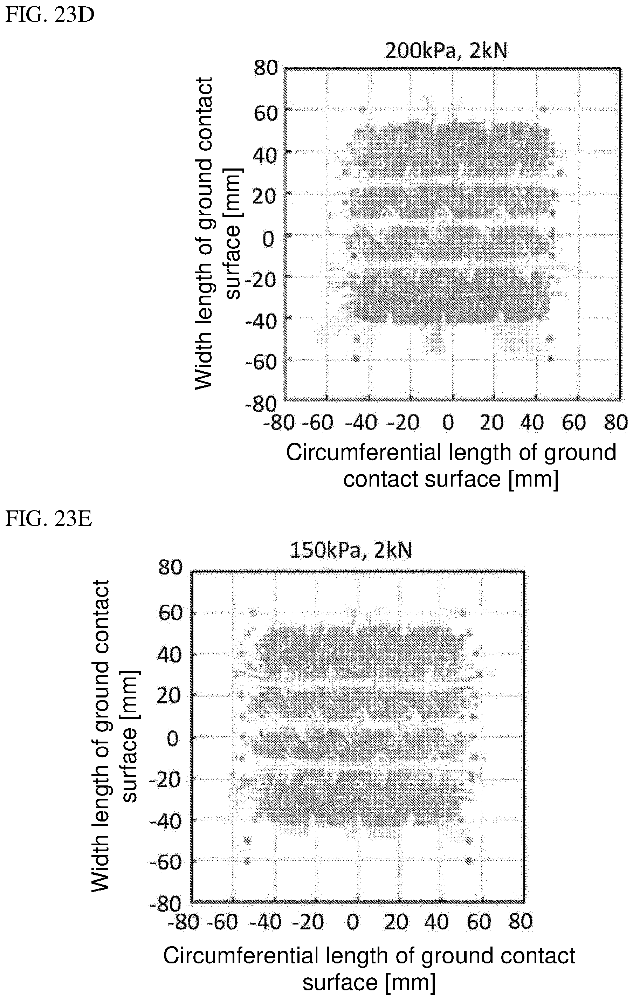

Figs. 23A to 23E illustrate graphs in which the shape of the ground contact surface measured when the tire assembly is stationary and the circumferential length of the ground contact surface estimated based on the measurement data of each piezoelectric element are superimposed on a plane in which the circumferential length of the ground contact surface is the horizontal axis and the length in the width direction is the vertical axis for each combination of the internal pressure and the wheel load. A plot point representing the estimated circumferential length is illustrated on a plane such that the middle is 0 on the horizontal axis and is illustrated corresponding to the position (-60 mm to 60 mm) of the piezoelectric element in the width direction. Note that positions -60 mm, -50 mm, and 60 mm in the width direction correspond to positions that are not grounded in a new tire, but the tire is deformed including a portion that is not grounded including a sidewall portion and the like. Therefore, in the measurement data of the voltage generated in these piezoelectric elements, the first peak and the second peak associated with the rotation of the tire appeared, similarly to the graph illustrated in Fig. 22. However, the magnitudes of the first peak and the second peak themselves were smaller than the magnitudes of the first peak and the second peak of other piezoelectric elements corresponding to the ground contact surface to a distinguishable extent. In the graphs of Figs. 23A to 23E, lengths calculated from measurement data of the piezoelectric elements located at -60 mm, -50 mm, and 60 mm are plotted together. As can be seen from Figs. 23A to 23E, the circumferential length of the ground contact surface estimated based on the output of the piezoelectric element increases as the load increases under the same internal pressure, and increases as the internal pressure decreases under the same load, and coincides with the shape change of the ground contact surface at rest. From this result, it was confirmed that the shape of the dynamic ground contact surface of the rotating tire can be estimated based on the position and output of the piezoelectric element.

### <Experiment 4>

The tire assembly produced in Experiment 3 was incorporated into an experimental device illustrated in Fig. 10, and rotated at a constant wheel load and rotational speed to acquire time-series measurement data of the voltage generated in each piezoelectric element. For the measurement data of each piezoelectric element, the average value of the first peak value Vp, the average value of the second peak value Vn, the time interval T1 of the first peak, and the time interval Tc between the first peak and the second peak were calculated. Thereafter, a tire assembly in which the tread of the tire assembly produced in Experiment 3 was worn by about 3 mm was produced, and incorporated into the experimental device illustrated in Fig. 10, and rotated under the same conditions of a wheel load and a rotational speed as those at the beginning, thereby acquiring time-series measurement data of the voltage generated in each piezoelectric element. Then, for the measurement data of each piezoelectric element, the average value of the first peak value Vp, the average value of the second peak value Vn, the time interval T1 of the first peak, and the time interval Tc between the first peak and the second peak were calculated.

### <Experimental result 4>

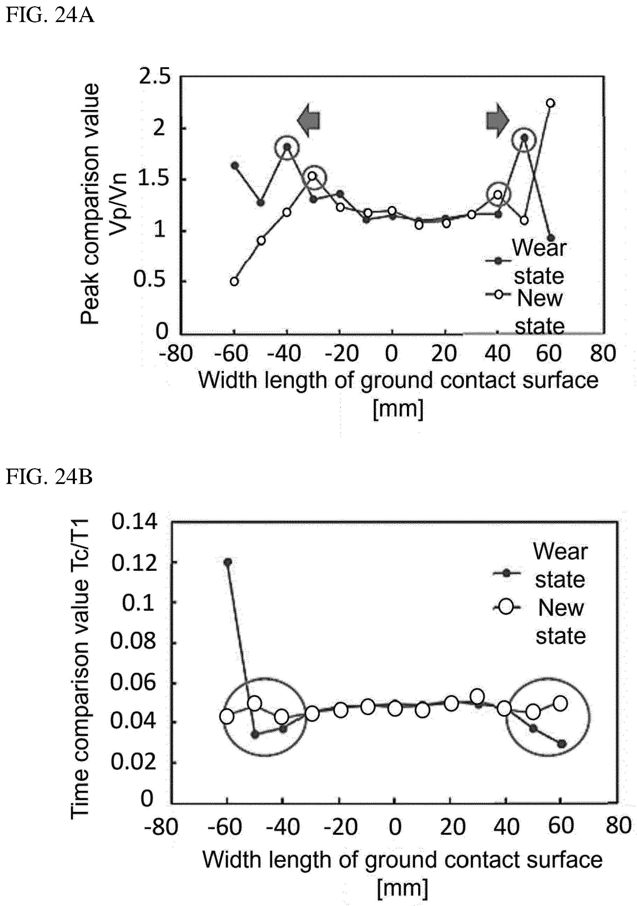

When the peak comparison value Vp/Vn with respect to the position of the piezoelectric element in the width direction is compared between the tire assembly when the tire assembly is new and the tire assembly when the tire assembly is worn, a graph as illustrated in Fig. 24A is obtained. From the graph of Fig. 24A, it has been confirmed that the peak comparison value is large when the tire is new, and portions (-30 mm, 40 mm) where the impact is considered to be the largest when the tire rotates are shifted to positions outside in the width direction (-40 mm, 50 mm) when the tire is worn. In this tire, it is considered that the width length of the ground contact surface is increased due to wear, and the wheel load is supported also at or near the sidewall portion. Furthermore, when the time comparison value Tc/T1 with respect to the position of the piezoelectric element in the width direction is compared between the tire assembly when the tire assembly is new and the tire assembly when the tire assembly is worn, a graph as illustrated in Fig. 24B is obtained. From the graph of Fig. 24B, it has been confirmed that the time comparison value Tc/T1 does not have a large difference between the time when the tread is new and the time when the tread is worn at the center in the width direction, but has a relatively large difference between the time when the tread is new and the time when the tread is worn at the edge in the width direction and in the vicinity thereof. Therefore, it has been confirmed that when the wear state is estimated by the time comparison value Tc/T1, only the measurement data of the piezoelectric element at the edge in the width direction of the ground contact surface of the tire and the vicinity thereof may be analyzed.

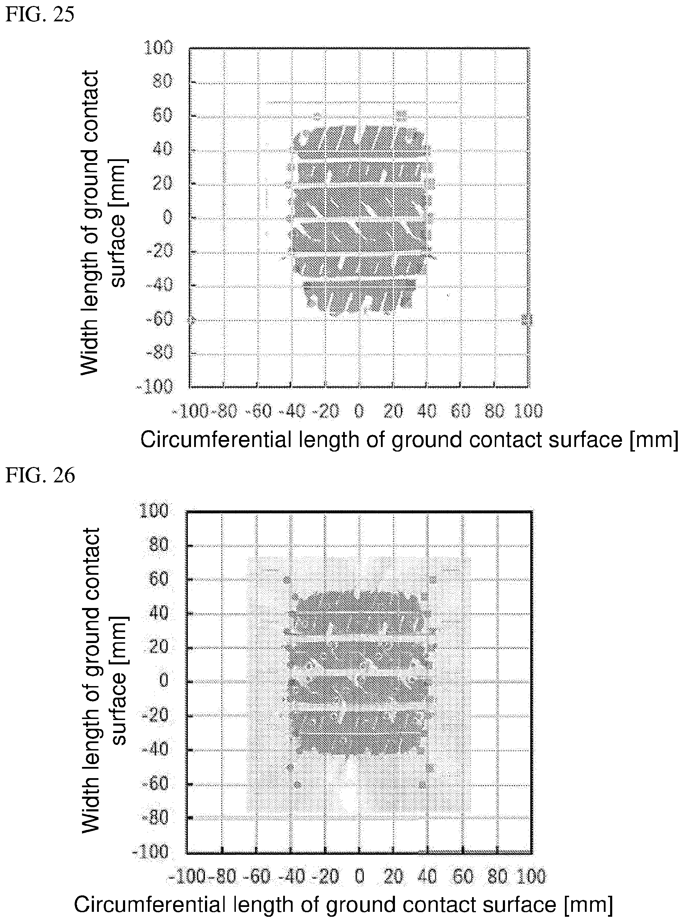

Moreover, the circumferential length of the ground contact surface with respect to the position of each piezoelectric element was estimated on the basis of the time comparison value Tc/T1 of each piezoelectric element of the tire assembly at the time of wear, and compared with the shape measured at rest, as illustrated in Fig. 25. Note that here, as the perimeter of the tire, a perimeter (1652 mm) in consideration of wear is adopted. As described above, since the time comparison value Tc/T1 greatly changed at the edge in the width direction of the tread and in the vicinity thereof, the estimated circumferential length of the ground contact surface was shorter at the edge in the width direction and in the vicinity thereof (-50 mm and 60 mm) than in the vicinity of the center in the width direction, and it was confirmed that the tendency coincided with the shape measured at rest. For reference, Fig. 26 (perimeter 1683 mm) illustrates a diagram comparing the circumferential length of the ground contact surface estimated by a similar experiment with the shape measured at rest for the same tire assembly when it is new (In Figs. 25 and 26, similarly to Experiment 3, the circumferential length estimated based on the peak appearing in each measurement data is plotted also for the piezoelectric element at the position considered not to be grounded.). When the estimated circumferential length of the ground contact surface was compared between Figs. 26 and 25, it was confirmed that the position where the estimated circumferential length was relatively short was shifted from -40 mm to -50 mm, and this change coincided with the change in the shape measured at rest. As a result, according to the present method, it has been confirmed that the shape of the ground contact surface can be estimated regardless of whether the tire is in a new state or a wear state, and the wear state of the tire can be estimated on the basis of the shape change of the ground contact surface.

### DESCRIPTION OF REFERENCE SIGNS

1, 1A to 1K: Power generator
6: Vehicle
7: Tire assembly
9: Estimation system
10: First member
20: Second member
60: External computer
70: Tire
Vp: First peak value
Vn: Second peak value
T: Time interval
Tc: Time interval
PE: Piezoelectric element

## Claims

1. A tire state estimation method comprising:
disposing at least one power generator (1A - 1K) inside the tire (70), the power generator (1A - 1K) generating a voltage in response to deformation of the tire (70);
acquiring time-series measurement data obtained by measuring at least one of the voltage or a physical quantity corresponding to the voltage while the tire (70) rotates;
identifying peaks (P1, P2) repeatedly appearing in the measurement data;
specifying at least one of values (Vp, Vn) of the peaks (P1, P2) or an interval (Tc, T1, T2) between the peaks; and
estimating at least one of a wear state or a ground contact state of the tire based on at least one of the specified values (Vp, Vn) or the specified interval (Tc, T1, T2),
wherein the power generator (1A- 1K) includes:
a first member (10) including a first insulating film (110) that forms a first surface (100); and
a second member (20) including a second insulating film (210) that forms a second surface (200), the second surface (200) facing the first surface (100) and being in contact with the first surface (100),
the first member (10) and the second member (30) are configured such that a true contact area between the first surface (100) and the second surface (200) changes depending on pressure applied to the first member (10) and the second member (20), and
the first insulating film (110) and the second insulating film (210) are configured such that one of the first insulating film (110) and the second insulating film (210) is positively charged and an other is negatively charged due to a change in the true contact area,
wherein
the identifying the peaks includes identifying a first peak (P1) and a second peak (P2) that appears in pairs with the first peak (P1), and
**characterized in that**
the specifying at least one of the values of the peaks or the interval between the peaks includes specifying a first peak value (Vp) that is a value of the first peak (P1), a second peak value (Vn) that is a value of the second peak (P2), a time interval (Tc) between the first peak (P1) and the second peak (P2) forming a pair, and a first interval (T1) that is an interval of the first peak (P1) or a second interval (T2) that is an interval of the second peak (P2), and **in that**
the estimating at least one of the wear state or the ground contact state of the tire includes calculating at least one of a peak comparison value (Vp/Vn, Vn/Vp) for comparing the first peak value (Vp) with the second peak value (Vn) or a time comparison value (Tc/T) for comparing the time interval (Tc) with either the first interval (T1) or the second interval (T2), and estimating the wear state of the tire based on at least one of the calculated peak comparison value (Vp/Vn, Vn/Vp) or the calculated time comparison value (Tc/T).

2. The tire state estimation method according to claim 1, wherein
the peak comparison value (Vp/Vn, Vn/Vp) is a ratio between the first peak value and the second peak value,
the time comparison value (Tc/T) is a ratio between the time interval and either the first interval or the second interval, and
the estimating the wear state of the tire includes estimating the wear state of the tire based on the peak comparison value (Vp/Vn, Vn/Vp) and the time comparison value (Tc/T).

3. The tire state estimation method according to claim 1, wherein
the disposing at least one power generator (1A - 1K) inside the tire includes disposing the at least one power generator at a position outside a width of a ground contact surface when the tire is new,
the specifying at least one of the values (Vp, Vn) of the peaks or the interval (Tc, T1, T2) between the peaks includes specifying values of the peaks of the power generator disposed at the outside position, and
the estimating at least one of the wear state or the ground contact state of the tire includes estimating at least one of the wear state or the ground contact state of the tire based on a change in the specified values.

4. The tire state estimation method according to claim 1, wherein
the disposing at least one power generator (1A - 1K) inside the tire includes disposing the at least one power generator (1A - 1K) at a position of an edge in a width direction of a ground contact surface when the tire is new,
the specifying at least one of the values of the peaks (Vp, Vn) or the interval (Tc, T1, T2) between the peaks includes specifying the values of the peaks of the power generator disposed at the position of the edge, and
the estimating at least one of the wear state or the ground contact state of the tire includes estimating at least one of the wear state or the ground contact state of the tire based on a change in the specified values.

5. The tire state estimation method according to claim 1, wherein
the estimating at least one of the wear state or the ground contact state of the tire includes calculating a time comparison value (Tc/T) for comparing the time interval (Tc) with either the first interval (T1) or the second interval (T2), and estimating the ground contact state of the tire based on the calculated time comparison value (Tc/T).

6. The tire state estimation method according to claim 5, further comprising
acquiring a perimeter of the tire (70),
wherein the estimating the ground contact state of the tire (70)includes estimating a circumferential length of a ground contact surface of the tire based on the calculated time comparison value and the acquired perimeter.

7. A tire state estimation system (9) comprising:
at least one power generator (1A - 1K) that is disposed inside a tire (70) and generates a voltage in response to deformation of the tire (70);
a measurement device (82) that is disposed inside the tire, measures at least one of the voltage or a physical quantity corresponding to the voltage while the tire (70) rotates, and outputs time-series measurement data; and
an estimation unit (60, 81) that identifies peaks (P1, P2) repeatedly appearing in the measurement data, specifies at least one of values (Vp, Vn) of the peaks or an interval (Tc, T1, T2) between the peaks, and estimates at least one of a wear state or a ground contact state of the tire based on at least one of the specified values (Vp, Vn) or the specified interval (1A - 1K),
wherein the power generator (1A - 1K) includes:
a first member (10) including a first insulating film (110) that forms a first surface (100); and
a second member (20) including a second insulating film (210) that forms a second surface (200), the second surface (200) facing the first surface (100) and being in contact with the first surface (100),
the first member (10) and the second member (20) are configured such that a true contact area between the first surface (100) and the second surface (200) changes depending on pressure applied to the first member (10) and the second member (20), and
the first insulating film (110) and the second insulating film (210) are configured such that one of the first insulating film (110) and the second insulating film (210) is positively charged and an other is negatively charged due to a change in the true contact area,
wherein
identifying the peaks includes identifying a first peak (P1) and a second peak (P2) that appears in pairs with the first peak (P1), and
**characterized in that**
specifying at least one of the values of the peaks or the interval between the peaks includes specifying a first peak value (Vp) that is a value of the first peak (P1), a second peak value (Vn) that is a value of the second peak (P2), a time interval (Tc) between the first peak (P1) and the second peak (P2) forming a pair, and a first interval (T1) that is an interval of the first peak (P1) or a second interval (T2) that is an interval of the second peak (P2), and **in that**
estimating at least one of the wear state or the ground contact state of the tire includes calculating at least one of a peak comparison value (Vp/Vn, Vn/Vp) for comparing the first peak value (Vp) with the second peak value (Vn) or a time comparison value (Tc/T) for comparing the time interval (Tc) with either the first interval (T1) or the second interval (T2), and estimating the wear state of the tire based on at least one of the calculated peak comparison value (Vp/Vn, Vn/Vp) or the calculated time comparison value (Tc/T).

8. The tire state estimation system (9) according to claim 7, further comprising:
at least two or more power generators (1A - 1K); and
a power storage device (80),
wherein the power storage device (80) is configured to store electric charges of some of the at least two or more power generators (1A - 1K).

## Patentansprüche

1. Reifenzustandsschätzverfahren, umfassend:
Anordnen mindestens eines Elektrizitätserzeugers (1A - 1K) im Inneren des Reifens (70), wobei der Elektrizitätserzeuger (1A - 1K) eine Spannung als Reaktion auf eine Verformung des Reifens (70) erzeugt;
Erfassen von Zeitreihenmessdaten, die durch Messen mindestens einer der Spannung oder einer physikalischen Größe, die der Spannung entspricht, erhalten werden, während sich der Reifen (70) dreht;
Identifizieren von Spitzen (P1, P2), die wiederholt in den Messdaten erscheinen;
Spezifizieren mindestens eines der Werte (Vp, Vn) der Spitzen (P1, P2) oder eines Intervalls (Tc, T1, T2) zwischen den Spitzen; und
Schätzen mindestens eines eines Verschleißzustands oder eines Bodenkontaktzustands des Reifens basierend auf mindestens einem der spezifizierten Werte (Vp, Vn) oder dem spezifizierten Intervall (Tc, T1, T2),
wobei der Elektrizitätserzeuger (1A - 1K) umfasst:
ein erstes Element (10), das einen ersten Isolierfilm (110) umfasst, der eine erste Oberfläche (100) bildet; und
ein zweites Element (20), das einen zweiten Isolierfilm (210) umfasst, der eine zweite Oberfläche (200) bildet, wobei die zweite Oberfläche (200) der ersten Oberfläche (100) zugewandt ist und mit der ersten Oberfläche (100) in Kontakt steht,
das erste Element (10) und das zweite Element (30) so konfiguriert sind, dass sich eine echte Kontaktfläche zwischen der ersten Oberfläche (100) und der zweiten Oberfläche (200) in Abhängigkeit von Druck ändert, der auf das erste Element (10) und das zweite Element (20) ausgeübt wird, und
der erste Isolierfilm (110) und der zweite Isolierfilm (210) so konfiguriert sind, dass aufgrund einer Änderung der echten Kontaktfläche einer des ersten Isolierfilms (110) und des zweiten Isolierfilms (210) positiv geladen ist und ein anderer negativ geladen ist,
wobei
das Identifizieren der Spitzen das Identifizieren einer ersten Spitze (P1) und einer zweiten Spitze (P2) umfasst, die in Paaren mit der ersten Spitze (P1) erscheint, und
**dadurch gekennzeichnet, dass**
das Spezifizieren mindestens eines der Werte der Spitzen oder des Intervalls zwischen den Spitzen das Spezifizieren eines ersten Spitzenwerts (Vp), der ein Wert der ersten Spitze (P1) ist, eines zweiten Spitzenwerts (Vn), der ein Wert der zweiten Spitze (P2) ist, eines Zeitintervalls (Tc) zwischen der ersten Spitze (P1) und der zweiten Spitze (P2), die ein Paar bilden, und eines ersten Intervalls (T1), das ein Intervall der ersten Spitze (P1) ist, oder eines zweiten Intervalls (T2), das ein Intervall der zweiten Spitze (P2) ist, umfasst, und dadurch, dass
das Schätzen mindestens eines des Verschleißzustands oder des Bodenkontaktzustands des Reifens das Berechnen mindestens eines eines Spitzenvergleichswerts (Vp/Vn, Vn/Vp) zum Vergleichen des ersten Spitzenwerts (Vp) mit dem zweiten Spitzenwert (Vn) oder eines Zeitvergleichswerts (Tc/T) zum Vergleichen des Zeitintervalls (Tc) mit entweder dem ersten Intervall (T1) oder dem zweiten Intervall (T2) und das Schätzen des Verschleißzustands des Reifens basierend auf mindestens einem des berechneten Spitzenvergleichswerts (Vp/Vn, Vn/Vp) oder des berechneten Zeitvergleichswerts (Tc/T) umfasst.

2. Reifenzustandsschätzverfahren nach Anspruch 1, wobei
der Spitzenvergleichswert (Vp/Vn, Vn/Vp) ein Verhältnis zwischen dem ersten Spitzenwert und dem zweiten Spitzenwert ist,
der Zeitvergleichswert (Tc/T) ein Verhältnis zwischen dem Zeitintervall und entweder dem ersten Intervall oder dem zweiten Intervall ist, und
das Schätzen des Verschleißzustands des Reifens das Schätzen des Verschleißzustands des Reifens basierend auf dem Spitzenvergleichswert (Vp/Vn, Vn/Vp) und dem Zeitvergleichswert (Tc/T) umfasst.

3. Reifenzustandsschätzverfahren nach Anspruch 1, wobei
das Anordnen mindestens eines Elektrizitätserzeugers (1A - 1K) im Inneren des Reifens das Anordnen des mindestens einen Elektrizitätserzeugers an einer Position außerhalb einer Breite einer Bodenkontaktfläche umfasst, wenn der Reifen neu ist,
das Spezifizieren mindestens eines der Werte (Vp, Vn) der Spitzen oder des Intervalls (Tc, T1, T2) zwischen den Spitzen das Spezifizieren von Werten der Spitzen des an der Außenposition angeordneten Elektrizitätserzeugers umfasst, und
das Schätzen mindestens eines des Verschleißzustands oder des Bodenkontaktzustands des Reifens das Schätzen mindestens eines des Verschleißzustands oder des Bodenkontaktzustands des Reifens basierend auf einer Änderung der spezifizierten Werte umfasst.

4. Reifenzustandsschätzverfahren nach Anspruch 1, wobei
das Anordnen mindestens eines Elektrizitätserzeugers (1A - 1K) im Inneren des Reifens das Anordnen des mindestens einen Elektrizitätserzeugers (1A - 1K) an einer Position einer Kante in einer Breitenrichtung einer Bodenkontaktfläche umfasst, wenn der Reifen neu ist,
das Spezifizieren mindestens eines der Werte der Spitzen (Vp, Vn) oder des Intervalls (Tc, T1, T2) zwischen den Spitzen das Spezifizieren der Werte der Spitzen des an der Position der Kante angeordneten Elektrizitätserzeugers umfasst, und
das Schätzen mindestens eines des Verschleißzustands oder des Bodenkontaktzustands des Reifens das Schätzen mindestens eines des Verschleißzustands oder des Bodenkontaktzustands des Reifens basierend auf einer Änderung der spezifizierten Werte umfasst.

5. Reifenzustandsschätzverfahren nach Anspruch 1, wobei
das Schätzen mindestens eines des Verschleißzustands oder des Bodenkontaktzustands des Reifens das Berechnen eines Zeitvergleichswerts (Tc/T) zum Vergleichen des Zeitintervalls (Tc) mit entweder dem ersten Intervall (T1) oder dem zweiten Intervall (T2) und das Schätzen des Bodenkontaktzustands des Reifens basierend auf dem berechneten Zeitvergleichswert (Tc/T) umfasst.

6. Reifenzustandsschätzverfahren nach Anspruch 5, ferner umfassend
Erfassen eines Umfangs des Reifens (70),
wobei das Schätzen des Bodenkontaktzustands des Reifens (70) das Schätzen einer Umfangslänge einer Bodenkontaktfläche des Reifens basierend auf dem berechneten Zeitvergleichswert und dem erfassten Umfang umfasst.

7. Reifenzustandsschätzsystem (9), umfassend:
mindestens einen Elektrizitätserzeuger (1A - 1K), der im Inneren eines Reifens (70) angeordnet ist und eine Spannung als Reaktion auf eine Verformung des Reifens (70) erzeugt;
eine Messvorrichtung (82), die im Inneren des Reifens angeordnet ist, mindestens eine der Spannung oder eine physikalische Größe, die der Spannung entspricht, misst, während sich der Reifen (70) dreht, und Zeitreihenmessdaten ausgibt; und
eine Schätzeinheit (60, 81), die Spitzen (P1, P2) identifiziert, die wiederholt in den Messdaten erscheinen, mindestens einen der Werte (Vp, Vn) der Spitzen oder ein Intervall (Tc, T1, T2) zwischen den Spitzen spezifiziert und mindestens einen eines Verschleißzustands oder eines Bodenkontaktzustands des Reifens basierend auf mindestens einem der spezifizierten Werte (Vp, Vn) oder dem spezifizierten Intervall (1A - 1K) schätzt,
wobei der Elektrizitätserzeuger (1A - 1K) umfasst:
ein erstes Element (10), das einen ersten Isolierfilm (110) umfasst, der eine erste Oberfläche (100) bildet; und
ein zweites Element (20), das einen zweiten Isolierfilm (210) umfasst, der eine zweite Oberfläche (200) bildet, wobei die zweite Oberfläche (200) der ersten Oberfläche (100) zugewandt ist und mit der ersten Oberfläche (100) in Kontakt steht,
das erste Element (10) und das zweite Element (20) so konfiguriert sind, dass sich eine echte Kontaktfläche zwischen der ersten Oberfläche (100) und der zweiten Oberfläche (200) in Abhängigkeit von Druck ändert, der auf das erste Element (10) und das zweite Element (20) ausgeübt wird, und
der erste Isolierfilm (110) und der zweite Isolierfilm (210) so konfiguriert sind, dass aufgrund einer Änderung der echten Kontaktfläche einer des ersten Isolierfilms (110) und des zweiten Isolierfilms (210) positiv geladen ist und ein anderer negativ geladen ist,
wobei
das Identifizieren der Spitzen das Identifizieren einer ersten Spitze (P1) und einer zweiten Spitze (P2) umfasst, die in Paaren mit der ersten Spitze (P1) erscheint, und
**dadurch gekennzeichnet, dass**
das Spezifizieren mindestens eines der Werte der Spitzen oder des Intervalls zwischen den Spitzen das Spezifizieren eines ersten Spitzenwerts (Vp), der ein Wert der ersten Spitze (P1) ist, eines zweiten Spitzenwerts (Vn), der ein Wert der zweiten Spitze (P2) ist, eines Zeitintervalls (Tc) zwischen der ersten Spitze (P1) und der zweiten Spitze (P2), die ein Paar bilden, und eines ersten Intervalls (T1), das ein Intervall der ersten Spitze (P1) ist, oder eines zweiten Intervalls (T2), das ein Intervall der zweiten Spitze (P2) ist, umfasst, und dadurch, dass
das Schätzen mindestens eines des Verschleißzustands oder des Bodenkontaktzustands des Reifens das Berechnen mindestens eines eines Spitzenvergleichswerts (Vp/Vn, Vn/Vp) zum Vergleichen des ersten Spitzenwerts (Vp) mit dem zweiten Spitzenwert (Vn) oder eines Zeitvergleichswerts (Tc/T) zum Vergleichen des Zeitintervalls (Tc) mit entweder dem ersten Intervall (T1) oder dem zweiten Intervall (T2) und das Schätzen des Verschleißzustands des Reifens basierend auf mindestens einem des berechneten Spitzenvergleichswerts (Vp/Vn, Vn/Vp) oder des berechneten Zeitvergleichswerts (Tc/T) umfasst.

8. Reifenzustandsschätzsystem (9) nach Anspruch 7, ferner umfassend:
mindestens zwei oder mehr Elektrizitätserzeugern (1A - 1K), und
eine Energiespeichervorrichtung (80),
wobei die Energiespeichervorrichtung (80) konfiguriert ist, um elektrische Ladungen von einigen der mindestens zwei oder mehr Elektrizitätserzeugern (1A - 1K) zu speichern.

## Revendications

1. Procédé d'estimation d'état de pneumatique comprenant les étapes consistant à :
disposer au moins un générateur de puissance (1A - 1K) à l'intérieur du pneumatique (70), le générateur de puissance (1A - 1K) générant une tension en réponse à une déformation du pneumatique (70) ;
acquérir des données de mesurage en série temporelle obtenues en mesurant l'une au moins d'une tension ou d'une quantité physique correspondant à la tension tandis que le pneumatique (70) est en rotation ;
identifier des pics (P1, P2) apparaissant de manière répétée dans les données de mesurage ;
spécifier au moins un élément parmi des valeurs (Vp, Vn) des pics (P1, P2) ou un intervalle (Tc, T1, T2) entre les pics ; et
estimer l'un au moins d'un état d'usure ou d'un état de contact au sol du pneumatique sur la base d'au moins un élément parmi les valeurs spécifiées (Vp, Vn) ou l'intervalle spécifié (Tc, T1, T2),
dans lequel le générateur de puissance (1A - 1K) inclut :
un premier élément (10) incluant un premier film isolant (110) qui forme une première surface (100) ; et
un second élément (20) incluant un second film isolant (210) qui forme une seconde surface (200), la seconde surface (200) étant tournée vers la première surface (100) et étant en contact avec la première surface (100),
le premier élément (10) et le second élément (20) sont configurés de telle sorte qu'une zone de contact véritable entre la première surface (100) et la seconde surface (200) change en dépendance d'une pression appliquée sur le premier élément (10) et le second élément (20), et
le premier film isolant (110) et le second film isolant (210) sont configurés de telle sorte que l'un du premier film isolant (110) et du second film isolant (210) est chargé positivement et que l'autre est chargé négativement en raison d'un changement dans la zone de contact véritable,
dans lequel
l'étape consistant à identifier les pics inclut d'identifier un premier pic (P1) et un second pic (P2) qui apparaît par paires avec le premier pic (P1), et
**caractérisé en ce que**
l'étape consistant à spécifier au moins un élément parmi les valeurs des pics ou l'intervalle entre les pics inclut de spécifier au moins une première valeur de pic (Vp) qui est une valeur du premier pic (P1), une seconde valeur de pic (Vn) qui est une valeur du second pic (P2), un intervalle temporel (Tc) entre le premier pic (P1) et le second pic (P2) formant une paire, et un premier intervalle (T1) qui est un intervalle du premier pic (P1) ou un second intervalle (T2) qui est un intervalle du second pic (P2), et **en ce que**
l'étape consistant à estimer l'un au moins dudit état d'usure ou dudit état de contact au sol du pneumatique inclut de calculer l'une au moins d'une valeur de comparaison de pics (Vp/Vn, Vn/Vp) pour comparer la première valeur de pic (Vp) à la seconde valeur de pic (Vn) ou d'une valeur de comparaison temporelle (Tc/T) pour comparer l'intervalle temporel (Tc) soit au premier intervalle (T1) soit au second intervalle (T2), et d'estimer l'état d'usure du pneumatique sur la base de l'une au moins de la valeur de comparaison de pics calculée (Vp/Vn, Vn/Vp) ou de la valeur de comparaison temporelle calculée (Tc/T).

2. Procédé d'estimation d'état de pneumatique selon la revendication 1, dans lequel
la valeur de comparaison de pics (Vp/Vn, Vn/Vp) est un rapport entre la valeur de premier pic et la valeur de second pic,
la valeur de comparaison temporelle (Tc/T) est un rapport entre l'intervalle temporel et soit le premier intervalle, soit le second intervalle, et
l'étape consistant à estimer l'état d'usure du pneumatique inclut d'estimer l'état d'usure du pneumatique sur la base de la valeur de comparaison de pics (Vp/Vn, Vn/Vp) et de la valeur de comparaison temporelle (Tc/T).

3. Procédé d'estimation d'état de pneumatique selon la revendication 1, dans lequel
l'étape consistant à disposer au moins un générateur de puissance (1A - 1K) à l'intérieur du pneumatique inclut de disposer ledit au moins un générateur de puissance à une position à l'extérieur d'une largeur d'une surface de contact au sol quand le pneumatique est neuf,
l'étape consistant spécifier ledit au moins un élément parmi les valeurs (Vp, Vn) des pics ou l'intervalle (Tc, T1, T2) entre les pics un flux de spécifier des valeurs des pics du générateur de puissance disposé à la position extérieure, et
l'étape consistant à estimer l'un du contact d'usure ou de l'état de contact au sol du pneumatique inclut d'estimer l'un au moins de l'état d'usure ou de l'état de contact au sol du pneumatique sur la base d'un changement dans les valeurs spécifiées.

4. Procédé d'estimation de l'état de pneumatique selon la revendication 1, dans lequel
l'étape consistant à disposer au moins un générateur de puissance (1A - 1K) à l'intérieur du pneumatique inclut de disposer ledit au moins un générateur de puissance (1A - 1K) à une position d'un bord dans une direction de la largeur d'une surface de contact au sol quand le pneumatique est neuf,
l'étape consistant à spécifier au moins un élément parmi les valeurs des pics (Vp, Vn) ou l'intervalle (Tc, T1, T2) entre les pics inclut de spécifier les valeurs des pics du générateur de puissance disposé à la position du bord, et
l'étape consistant à estimer l'un au moins de l'état d'usure ou de l'état de contact au sol du pneumatique inclut d'estimer l'un au moins de l'état d'usure ou de l'état de contact au sol du pneumatique sur la base d'un changement dans les valeurs spécifiées.

5. Procédé d'estimation d'état de pneumatique selon la revendication 1, dans lequel
l'étape consistant à estimer l'un au moins de l'état d'usure ou de l'état de contact au sol du pneumatique inclut de calculer une valeur de comparaison temporelle (Tc/T) pour comparer l'intervalle temporel (Tc) soit au premier intervalle (T1), soit au second intervalle (T2), et d'estimer l'état de contact au sol du pneumatique sur la base de la valeur de comparaison temporelle calculée (Tc/T).

6. Procédé d'estimation d'état de pneumatique selon la revendication 5, comprenant en outre l'étape consistant à :
acquérir un périmètre du pneumatique (70),
dans lequel l'étape consistant à estimer l'état de contact au sol du pneumatique (70) inclut d'estimer une longueur circonférentielle d'une surface de contact au sol du pneumatique sur la base de la valeur de comparaison temporelle calculée et du périmètre acquis.

7. Système d'estimation d'état de pneumatique (9) comprenant :
au moins un générateur de puissance (1A - 1K) qui est disposé à l'intérieur d'un pneumatique (70) et qui génère une tension en réponse à une déformation du pneumatique (70) ;
un dispositif de mesurage (82) qui est disposé à l'intérieur du pneumatique, qui mesure l'une au moins d'une tension ou d'une quantité physique correspondant à la tension tandis que le pneumatique (70) est en rotation, et qui sort des données de mesurage en série temporelle ; et
une unité d'estimation (60, 81) qui identifie des pics (P1, P2) apparaissant de manière répétée dans les données de mesurage, qui spécifie au moins un élément parmi des valeurs (Vp, Vn) des pics (P1, P2) ou un intervalle (Tc, T1, T2) entre les pics, et qui estime l'un au moins d'un état d'usure ou d'un état de contact au sol du pneumatique sur la base d'au moins un élément parmi les valeurs spécifiées (Vp, Vn) ou l'intervalle spécifié (1A - 1K),
dans lequel le générateur de puissance (1A - 1K) inclut :
un premier élément (10) incluant un premier film isolant (110) qui forme une première surface (100) ; et
un second élément (20) incluant un second film isolant (210) qui forme une seconde surface (200), la seconde surface (200) étant tournée vers la première surface (100) et étant en contact avec la première surface (100),
le premier élément (10) et le second élément (20) sont configurés de telle sorte qu'une zone de contact véritable entre la première surface (100) et la seconde surface (200) change en dépendance d'une pression appliquée sur le premier élément (10) et le second élément (20), et
le premier film isolant (110) et le second film isolant (210) sont configurés de telle sorte que l'un du premier film isolant (110) et du second film isolant (210) est chargé positivement et que l'autre est chargé négativement en raison d'un changement dans la zone de contact véritable,
dans lequel
l'étape consistant à identifier les pics inclut d'identifier un premier pic (P1) et un second pic (P2) qui apparaît par paires avec le premier pic (P1), et
**caractérisé en ce que**
l'étape consistant à spécifier au moins un élément parmi les valeurs des pics ou l'intervalle entre les pics inclut de spécifier au moins une première valeur de pic (Vp) qui est une valeur du premier pic (P1), une seconde valeur de pic (Vn) qui est une valeur du second pic (P2), un intervalle temporel (Tc) entre le premier pic (P1) et le second pic (P2) formant une paire, et un premier intervalle (T1) qui est un intervalle du premier pic (P1) ou un second intervalle (T2) qui est un intervalle du second pic (P2), et **en ce que**
l'étape consistant à estimer l'un au moins dudit état d'usure ou dudit état de contact au sol du pneumatique inclut de calculer l'une au moins d'une valeur de comparaison de pics (Vp/Vn, Vn/Vp) pour comparer la première valeur de pic (Vp) à la seconde valeur de pic (Vn) ou d'une valeur de comparaison temporelle (Tc/T) pour comparer l'intervalle temporel (Tc) soit au premier intervalle (T1), soit au second intervalle (T2), et d'estimer l'état d'usure du pneumatique sur la base de l'une au moins de la valeur de comparaison de pics calculée (Vp/Vn, Vn/Vp) ou de la valeur de comparaison temporelle calculée (Tc/T).

8. Système d'estimation d'état de pneumatique (9) selon la revendication 7, comprenant en outre :
au moins deux ou plusieurs générateurs de puissance (1A - 1K) ; et
un dispositif de stockage de puissance (80),
dans lequel le dispositif de stockage de puissance (80) est configuré pour stocker des charges électriques de certains desdits au moins deux ou plusieurs générateurs de puissance (1A - 1K).
